# EUROPEAN PATENT APPLICATION

(11) **EP 3 910 456 A1**
(43) Date of publication of application: **17.11.2021**
(21) Application number: 19919491.1
(22) Date of filing: 12.03.2019
(51) Int. Cl.: G06F 3/048

(54) **INPUT METHOD CANDIDATE CONTENT RECOMMENDATION METHOD AND ELECTRONIC DEVICE**

(71) Applicant: Huawei Technologies Co., Ltd., Shenzhen, Guangdong 518129 (CN)
(72) Inventor: ZHANG, Yue, Shenzhen, Guangdong 518129 (CN); LI, Dawei, Shenzhen, Guangdong 518129 (CN); QIAN, Aibin, Shenzhen, Guangdong 518129 (CN); WANG, Kaixin, Shenzhen, Guangdong 518129 (CN)
(74) Representative: MERH-IP Matias Erny Reichl Hoffmann Patentanwälte PartG mbB
(86) International application number: PCT/CN2019/077884
(87) International publication number: WO 2020/181505

(57) **Abstract**

This application discloses an input method candidate content recommendation method and an electronic device, and relates to the field of electronic devices. This resolves a problem that accuracy and input efficiency are low because candidate content presented after an input method application is started may not be candidate content expected by a user. The electronic device displays an interface of a first application that includes a first input box, and receives an operation of selecting the first input box by a user. In response to the operation, the electronic device displays an interface of an input method application, where the interface of the input method application includes at least one piece of first candidate content. The electronic device displays an interface including a second input box, where the second input box is an input box of the first application other than the first input box, or an input box of a second application, and receives an operation of selecting the second input box by the user. In response to the operation, the electronic device displays an interface of the input method application, where the interface of the input method application includes at least one piece of second candidate content, and the second candidate content is different from the first candidate content.

## Description

### TECHNICAL FIELD

Embodiments of this application relate to the field of electronic devices, and in particular, to an input method candidate content recommendation method and an electronic device.

### BACKGROUND

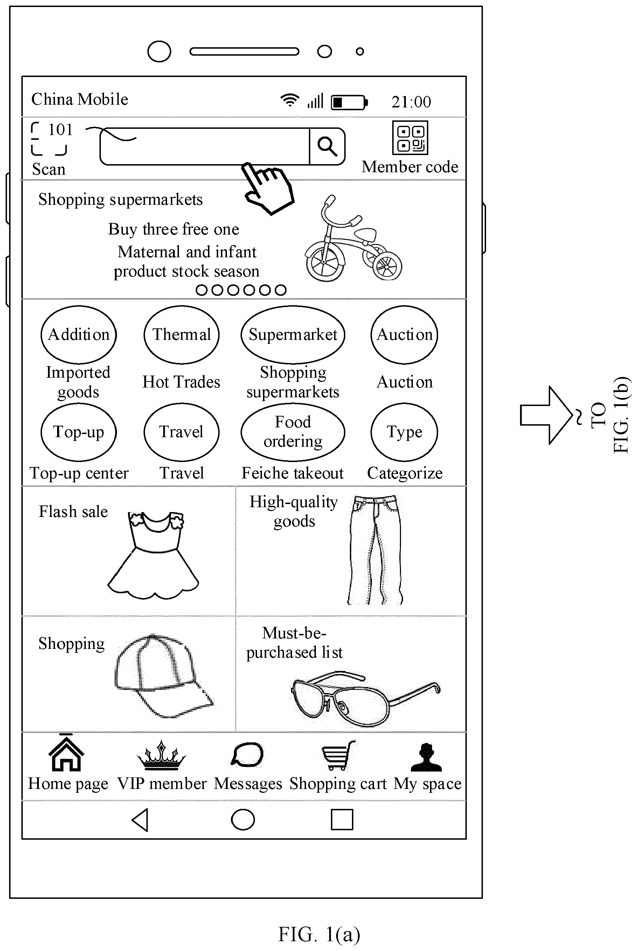

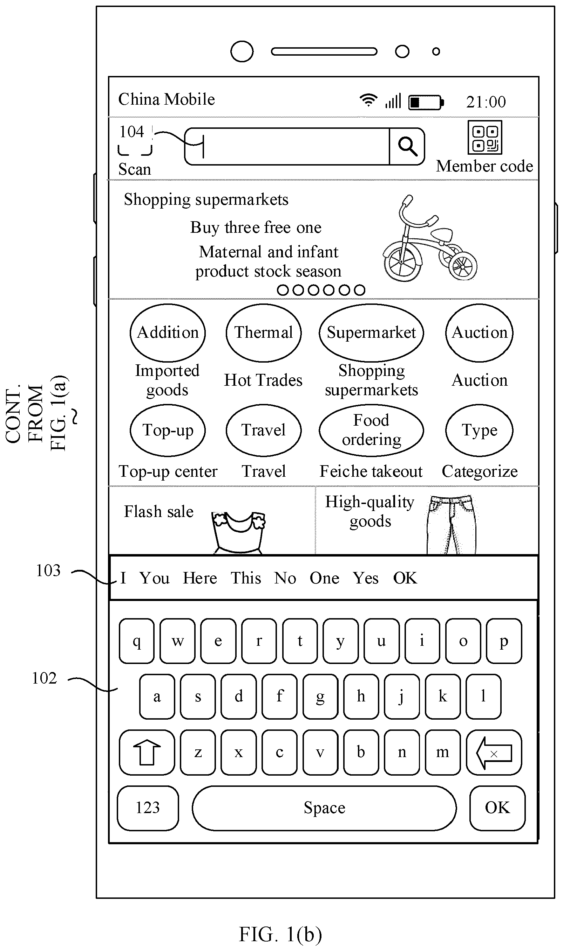

An input method application (input method application, IMA) may also be referred to as an input method engine (input method engine, IME) or an input method editor (input editor method, IME), and is software used to input a word, a punctuation mark, a number, and the like. An input method application is installed in an electronic device such as a mobile phone, to help a user input a word, a punctuation mark, a number, and the like into another application of the electronic device. For example, the mobile phone includes a shopping application and an input method application. The user wants to search, by inputting a word into an input box of the shopping application, for a product that the user wants to purchase. As shown in FIG. 1(a), after starting the shopping application, the user may perform a trigger operation on an input box 101 in an interface of the shopping application. In response to the trigger operation, the mobile phone may call the input method application of the mobile phone. After the input method application is started, as shown in FIG. 1(b), the mobile phone may display an interface 102 of the input method application, so that the user may input a word into the input box of the shopping application. In addition, after the input method application is started, the mobile phone may display a cursor 104 in the input box 101, to prompt the user to input a word into the input box 101 by using the input method application.

In the conventional technology, an interface of the input method application that is displayed after the input method application is started usually includes some candidate content, for example, candidate words. As shown in FIG. 1(b), the interface 102 of the input method application includes a plurality of candidate words 103: "I", "You", "Here", "This", "No", "One", "Yes", and "OK", for selection by the user.

However, after the input method application is started, candidate content presented to the user is usually some default candidate content provided by the input method application, and may not be candidate content expected by the user. Consequently, accuracy and input efficiency are low.

### SUMMARY

Embodiments of this application provide an input method candidate content recommendation method and an electronic device, to resolve a problem that accuracy and input efficiency are low because candidate content presented after an input method application is started may not be candidate content expected by a user.

To achieve the foregoing objective, the following technical solutions are used in the embodiments of this application.

According to a first aspect, an embodiment of this application provides an input method candidate content recommendation method. The method may be applied to an electronic device including an input method application, and the method may include: The electronic device displays an interface of a first application, where the interface of the first application includes a first input box. The electronic device receives an operation of selecting the first input box by a user. In response to the operation of selecting the first input box by the user, the electronic device may display an interface of the input method application, where the interface of the input method application includes at least one piece of first candidate content. The electronic device displays an interface including a second input box, where the second input box may be an input box of the first application other than the first input box, or an input box of a second application. The electronic device receives an operation of selecting the second input box by the user. In response to the operation of selecting the second input box by the user, the electronic device may also display an interface of the input method application. In this case, the interface of the input method application includes at least one piece of second candidate content, and the second candidate content is different from the first candidate content.

According to the input method candidate content recommendation method provided in this embodiment of this application, when the user intends to input content into an input box of an application of the electronic device by using the input method application, the electronic device may present the user with candidate content in the interface of the input method application after the input method application is started. In addition, for different applications or even different input boxes of a same application, the electronic device may present different candidate content for selection by the user, instead of presenting default candidate content such as "I", "You", "Here", "This", "No", "One", "Yes", "OK" for all applications by using the input method application. In this way, candidate content presented after the input method application is started can better meet a requirement of the user, thereby improving accuracy of the presented candidate content and input efficiency.

In a possible implementation, before the electronic device displays the interface of the input method application that includes the at least one piece of first candidate content, the method may further include: The electronic device obtains the at least one piece of first candidate content based on at least one piece of to-be-prompted content, where the to-be-prompted content is content that is specified by the first application and that needs to be prompted in the first input box. Because the application is generally more familiar with content that is most likely to be input into the input box of the application, the electronic device obtains, based on the content that is specified by the first application and that needs to be prompted in the first input box, candidate content that needs to be presented after the input method application is started, that is, the first candidate content, so that accuracy of the presented candidate content is higher.

In another possible implementation, before the electronic device obtains the at least one piece of first candidate content based on the at least one piece of to-be-prompted content, the method may further include: The electronic device obtains the at least one piece of to-be-prompted content, and stores the at least one piece of to-be-prompted content in a storage area of the input method application. That the electronic device obtains the at least one piece of first candidate content based on at least one piece of to-be-prompted content may include: The electronic device obtains the at least one piece of first candidate content based on the at least one piece of to-be-prompted content stored in the storage area of the input method application.

In another possible implementation, that the electronic device stores the at least one piece of to-be-prompted content in a storage area of the input method application may include: The electronic device calls a first API to store the at least one piece of to-be-prompted content in the storage area of the input method application, where the first API provides an information channel from the first application to the input method application.

In another possible implementation, that the electronic device obtains the at least one piece of first candidate content based on at least one piece of to-be-prompted content may include: The electronic device obtains the at least one piece of first candidate content based on the at least one piece of to-be-prompted content obtained by calling a first API.

The first API provides an information channel for the first application to specify, to the input method application, the content that needs to be prompted in the input box. In this way, the content that is specified by the first application and that needs to be prompted in the first input box may be transmitted to the input method application by using the first API.

In another possible implementation, the first API is an interface of an application framework layer of the electronic device. Because the first API is the interface of the application framework layer, each application located at an application layer may implement a corresponding function by calling the interface, for example, content that is specified by the application and that needs to be prompted in an input box of the application is transmitted to the input method application. In this way, a developer does not need to negotiate with a developer of each application about an interface, but can implement a corresponding function through one interface.

In another possible implementation, that the electronic device obtains the at least one piece of to-be-prompted content may include: The electronic device reads the at least one piece of to-be-prompted content from a storage area of the first application. Alternatively, the electronic device sends a request message to a server of the first application, and receives a response message from the server, where the response message includes the at least one piece of to-be-prompted content. Alternatively, the electronic device obtains the at least one piece of to-be-prompted content from the interface of the first application.

In another possible implementation, the at least one piece of first candidate content is the same as the at least one piece of to-be-prompted content. That is, content specified by the first application is the same as candidate content presented to the user after the input method application is started. In this way, the presented candidate content better meets a requirement of the first application.

In another possible implementation, that the electronic device obtains the at least one piece of first candidate content based on at least one piece of to-be-prompted content may include: The electronic device extracts a keyword in the at least one piece of to-be-prompted content, and uses the keyword as the at least one piece of first candidate content.

In another possible implementation, the at least one piece of to-be-prompted content includes at least a first-layer keyword and a second-layer keyword, and that the electronic device obtains the at least one piece of first candidate content based on at least one piece of to-be-prompted content may include: The electronic device extracts the first-layer keyword in the at least one piece of to-be-prompted content, and uses the first-layer keyword as the at least one piece of first candidate content.

In another possible implementation, when the at least one piece of to-be-prompted content includes at least the first-layer keyword and the second-layer keyword, after the electronic device displays the interface of the input method application that includes the at least one piece of first candidate content, the method may further include: The electronic device receives an operation of selecting the first-layer keyword by the user. In response to the operation of selecting the first-layer keyword, the electronic device displays the second-layer keyword in the interface of the input method application.

In this way, the first-layer keyword is first displayed, and then the second-layer keyword is displayed based on that the user selects the first-layer keyword, so that input efficiency can be further improved.

In addition, the foregoing mainly describes specific implementation of obtaining the first candidate content. For implementation of obtaining the second candidate content, refer to the implementation of obtaining the first candidate content. Details are not described herein again.

According to a second aspect, an embodiment of this application provides an electronic device. The electronic device may include one or more processors, a memory, and a touchscreen. The touchscreen is configured to: receive an operation of a user, and display content according to indications of the one or more processors. The memory is configured to store one or more programs. The one or more processors are configured to run the one or more programs to implement the following actions: indicating the touchscreen to display an interface of a first application, where the interface of the first application includes a first input box; indicating the touchscreen to receive an operation of selecting the first input box by the user; and in response to the operation of selecting the first input box by the user, indicating the touchscreen to display an interface of the input method application, where the interface of the input method application includes at least one piece of candidate content.

The one or more processors are further configured to run the one or more programs to implement the following actions: indicating the touchscreen to display an interface including a second input box, where the second input box is an input box of the first application other than the first input box, or an input box of a second application; indicating the touchscreen to receive an operation of selecting the second input box by the user; and in response to the operation of selecting the second input box by the user, indicating the touchscreen to display an interface of the input method application, where the interface of the input method application includes at least one piece of second candidate content, and the second candidate content is different from the first candidate content.

In a possible implementation, the one or more processors are further configured to run the one or more programs to implement the following action: obtaining the at least one piece of first candidate content based on at least one piece of to-be-prompted content, where the to-be-prompted content is content that is specified by the first application and that needs to be prompted in the first input box.

In another possible implementation, the one or more processors are further configured to run the one or more programs to implement the following actions:
obtaining the at least one piece of to-be-prompted content, and storing the at least one piece of to-be-prompted content in a storage area of the input method application of the memory; and the obtaining the at least one piece of first candidate content based on at least one piece of to-be-prompted content may include: obtaining the at least one piece of first candidate content based on the at least one piece of to-be-prompted content stored in the storage area of the input method application of the memory.

In another possible implementation, the storing the at least one piece of to-be-prompted content in a storage area of the input method application of the memory may include: calling a first API to store the at least one piece of to-be-prompted content in the storage area of the input method application of the memory, where the first API provides an information channel from the first application to the input method application.

In another possible implementation, the obtaining the at least one piece of first candidate content based on at least one piece of to-be-prompted content may include: obtaining the at least one piece of first candidate content based on the at least one piece of to-be-prompted content obtained by calling a first API.

In another possible implementation, the first API may be an interface of an application framework layer of the electronic device.

In another possible implementation, the obtaining the at least one piece of to-be-prompted content may include: reading the at least one piece of to-be-prompted content from a storage area of the first application of the memory; or sending a request message to a server of the first application, and receiving a response message from the server, where the response message includes the at least one piece of to-be-prompted content; or obtaining the at least one piece of to-be-prompted content from the interface of the first application.

In another possible implementation, the at least one piece of first candidate content is the same as the at least one piece of to-be-prompted content; or the obtaining the at least one piece of first candidate content based on at least one piece of to-be-prompted content may include: extracting a keyword in the at least one piece of to-be-prompted content, and using the keyword as the at least one piece of first candidate content; or the at least one piece of to-be-prompted content includes at least a first-layer keyword and a second-layer keyword, and the obtaining the at least one piece of first candidate content based on at least one piece of to-be-prompted content may include: extracting the first-layer keyword in the at least one piece of to-be-prompted content, and using the first-layer keyword as the at least one piece of first candidate content.

In another possible implementation, when the at least one piece of to-be-prompted content includes at least the first-layer keyword and the second-layer keyword, the one or more processors are further configured to run the one or more programs to implement the following actions: indicating the touchscreen to receive an operation of selecting the first-layer keyword by the user; and in response to the operation of selecting the first-layer keyword, indicating the touchscreen to display the second-layer keyword in the interface of the input method application.

According to a third aspect, an embodiment of this application provides a computer storage medium. The computer storage medium may include computer instructions. When the computer instructions are run on an electronic device, the electronic device is enabled to perform the input method candidate content recommendation method in any one of the first aspect or the possible implementations of the first aspect.

According to a fourth aspect, an embodiment of this application provides a computer program product. When the computer program product is run on a computer, the computer is enabled to perform the input method candidate content recommendation method in any one of the first aspect or the possible implementations of the first aspect

According to a fifth aspect, an embodiment of this application provides an apparatus. The apparatus has functions of implementing behavior of the electronic device in the method in the first aspect. The functions may be implemented by hardware, or may be implemented by hardware by executing corresponding software. The hardware or the software includes one or more modules corresponding to the foregoing functions, for example, a display unit or module, an input unit or module, a data obtaining unit or module, a data parsing unit or module, and a data presentation unit or module.

It should be understood that descriptions of technical features, technical solutions, beneficial effects, or similar words in this application do not imply that all features and advantages can be implemented in any individual embodiment. On the contrary, it may be understood that the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one same embodiment. Further, the technical features, the technical solutions, and the beneficial effects described in the embodiments may be combined in any appropriate manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all the embodiments.

### BRIEF DESCRIPTION OF DRAWINGS

FIG. 1(a) and FIG. 1(b) are a schematic diagram of a display interface of input method candidate content in the conventional technology;
FIG. 2 is a schematic structural diagram of an electronic device according to an embodiment of this application;
FIG. 3 is a block diagram of a software structure of an electronic device according to an embodiment of this application;
FIG. 4 is a schematic flowchart of an input method candidate content recommendation method according to an embodiment of this application;
FIG. 5(a) to FIG. 5(d) are a schematic diagram of a display interface of input method candidate content according to an embodiment of this application;
FIG. 6(a) to FIG. 6(c) are a schematic diagram of another display interface of input method candidate content according to an embodiment of this application;
FIG. 7(a) to FIG. 7(c) are a schematic diagram of still another display interface of input method candidate content according to an embodiment of this application;
FIG. 8(a) to FIG. 8(c) are a schematic diagram of still another display interface of input method candidate content according to an embodiment of this application;
FIG. 9 is a schematic structural diagram of another electronic device according to an embodiment of this application; and
FIG. 10 is a schematic diagram of composition of an input method candidate content recommendation apparatus according to an embodiment of this application.

### DESCRIPTION OF EMBODIMENTS

A term such as "example" or "for example" is used for representing an example, an example illustration, or a description below. Any embodiment or design scheme described as an "example" or "for example" in the embodiments of this application should not be explained as being preferable or having more advantages than another embodiment or design scheme. Exactly, use of the term such as "example" or "for example" is intended to present a relative concept in a specific manner.

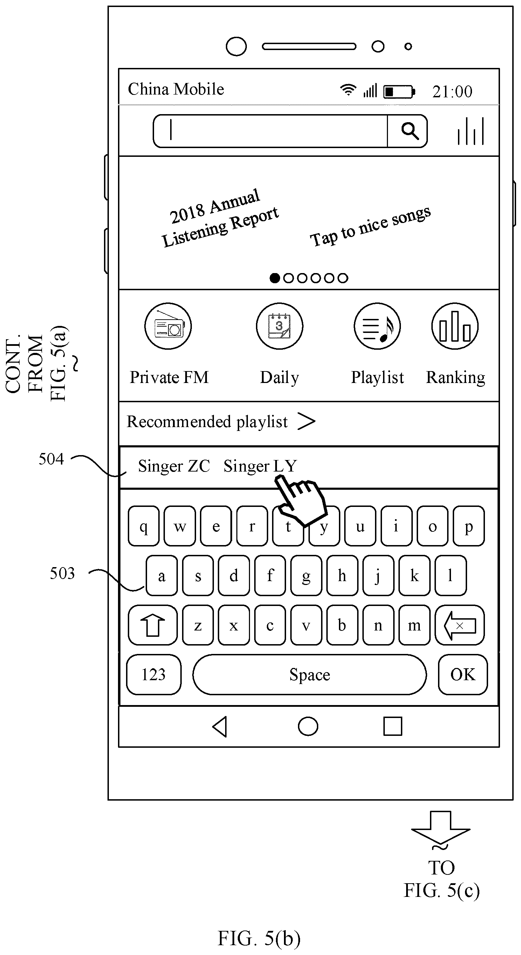

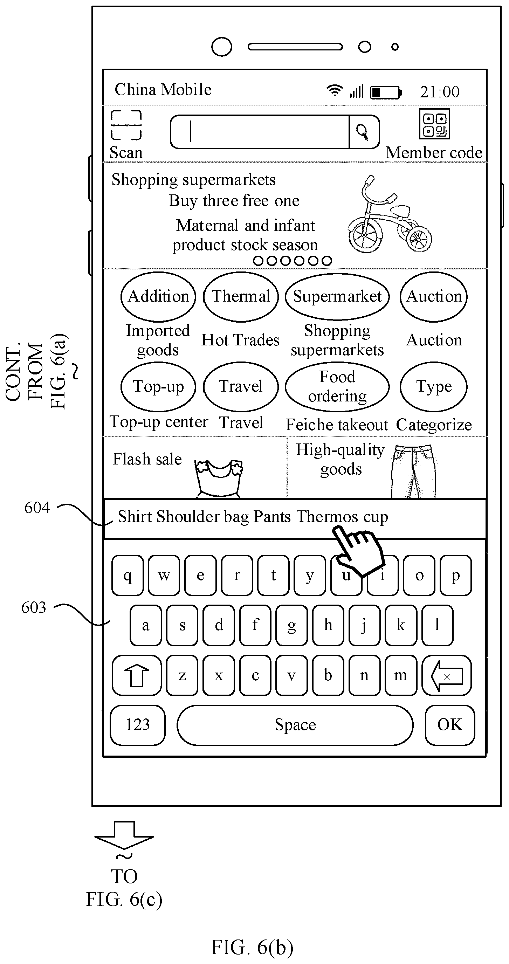

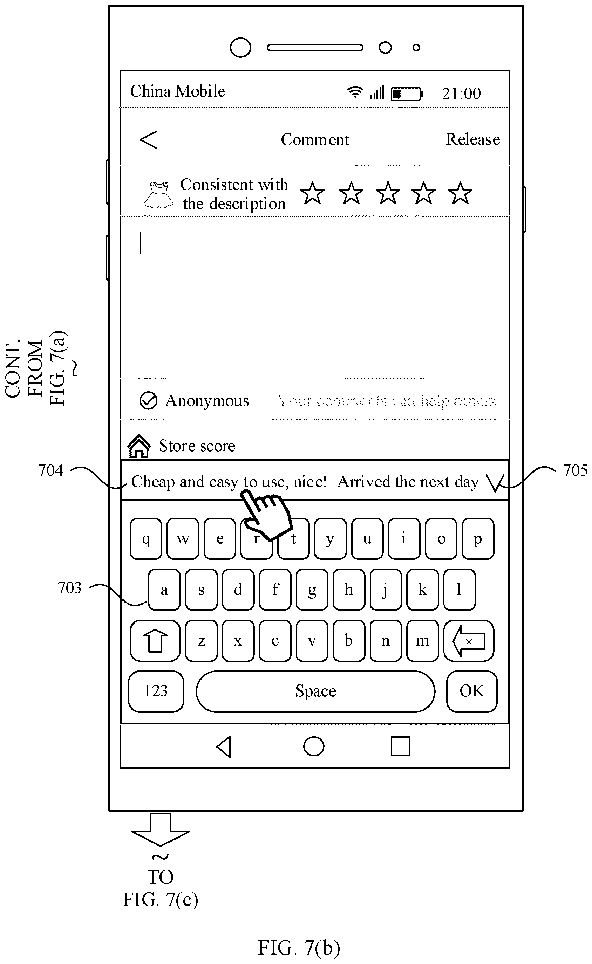

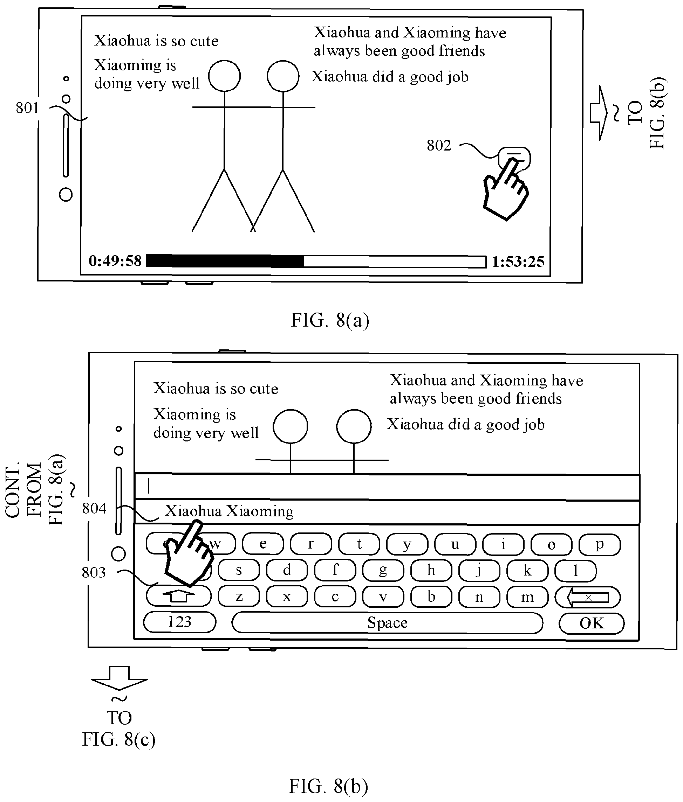

For ease of understanding, some concepts related to embodiments of this application are provided as examples for reference. Details are as follows:
Word: The word may be written language in a variety of language environments (for example, Chinese, English, Japanese, and Korean). The word may be a single character or a word consisting of two or more characters. For example, written language in a Chinese environment may be referred to as a Chinese word. The Chinese word may be a single Chinese character or a word consisting of two or more Chinese characters.
Punctuation mark: The punctuation mark is a written symbol used to indicate pauses and tones. The punctuation mark is a symbol used to aid words in language recording, and may be used to indicate pauses, mood, and the nature and function of a word.
In some embodiments, the punctuation mark may be classified into a dot, a label, and a symbol. The dot indicates pauses of different lengths in spoken language, and the label indicates the nature or function of words in written language. For example, the dot may include: a period (.), a question mark (?), an exclamation mark (!), a comma (,), a dunhao ('), a semicolon (;), and a colon (:). The label may include: quotation marks (" " and ''), brackets ((), [], and {}), a dash (-), an ellipsis (...), an emphasis (.), chevrons (<<>> and < >), an interpunct (.), a connection mark (-), and a specific name mark (_). The symbol may include: a comment mark (*), a hidden mark (×), a mark indicating a word that cannot be identified (□), a slash mark (/), an identifier mark (▲ or •), a substitution mark (∼), 12 continuous periods (...), and an arrow mark (→).
Input box: The input box may be a text control used to input a word, a punctuation mark, and a number. The input box may be included in interfaces of various applications displayed by an electronic device. After a user selects the input box (for example, the user taps the input box), the electronic device calls an input method application of the electronic device, to assist the user in inputting content into the input box.
Candidate content: The candidate content is content presented in an interface of the input method application (for example, a candidate box of the interface of the input method application) for selection by the user. The candidate content may include one or more of the following: a word, a punctuation mark, a number, and the like.
Interface of an input method application: The interface of the input method application is an interface displayed after the input method application is started. For example, an interface 102 shown in FIG. 1(b), an interface 503 shown in FIG. 5(b), an interface 603 shown in FIG. 6(b), an interface 703 shown in FIG. 7(b), and an interface 803 shown in FIG. 8(b) each are the interface of the input method application. In addition, the interface of the input method application in the foregoing accompanying drawings is illustrated by using an input interface of a letter key combination of 26 keys as an example. The interface of the input method application may alternatively be an input interface of a number key combination of 9 keys, or another input interface. This is not specifically limited in the embodiments of this application.

The following describes the technical solutions in the embodiments of this application with reference to the accompanying drawings in the embodiments of this application.

An input method candidate content recommendation method provided in the embodiments of this application may be applied to an electronic device including an input method application. The input method application may help a user input content such as a word, a punctuation mark, and a number into an application having an input box of the electronic device.

In the method provided in the embodiments of this application, when the electronic device determines that the user intends to input content into an input box of an application having an input box, the electronic device may call the input method application of the electronic device. In addition, after the input method application is started, the electronic device may display an interface of the input method application that includes at least one piece of candidate content. Generally, content input by the user into input boxes of different applications (the application is an application having an input box) may be different, and content input by the user into different input boxes of a same application may also be different. Therefore, to enable candidate content included in the interface of the input method application that is displayed after the input method application is started to better meet a requirement of the user, different applications may specify, according to a feature of content input by the user into input boxes of the applications, content that needs to be prompted in the input boxes.

In the embodiments, the electronic device may obtain, based on content that is specified by the application and that needs to be prompted in the input box, candidate content presented in the interface of the input method application after the input method application is started, that is, the at least one piece of candidate content. In this way, when the user intends to use the input method application to input content into an input box of an application having the input box of the electronic device, after the input method application is started, the electronic device may present, to the user in the interface of the input method application, candidate content that better meets a requirement of the user, for selection by the user.

For example, the application having the input box is "Music". If the user intends to input a word into an input box of "Music", after the input method application is started, the electronic device may present, to the user in the interface of the input method application, candidate content obtained based on content that is specified by "Music" and that needs to be prompted in the input box. For example, the content that is specified by "Music" and that needs to be prompted in the input box may include words such as a song name and a singer name.

For another example, the application having the input box is a shopping application. If the user intends to input a word into an input box of the shopping application, after the input method application is started, the electronic device may present, to the user in the interface of the input method application, candidate content obtained based on content that is specified by the shopping application and that needs to be prompted in the input box. For example, the content that is specified by the shopping application and that needs to be prompted in the input box may include words such as a commodity name and a store name.

It may be understood that, when the user intends to input content into the input box of "Music" or the shopping application, after the input method application is started, candidate content presented by the electronic device to the user in the interface of the input method application is different, and better meets a requirement of the user, instead of default candidate content provided by input method application, for example, "I, You, Here, This, No, One, Yes, OK". In this way, candidate content presented after the input method application is started can better meet a requirement of the user, thereby improving accuracy of the presented candidate content, and improving input efficiency.

In some embodiments, the input method application and the application having the input box each may be an application (application, APP) installed in the electronic device. The input method application may be a system application, or may be a third-party application. The application having the input box may be a system application such as "Messages" or "Calendar", or may be a third-party application such as "Facebook (facebook)", "Amazon", "Maps", or "Music". The system application is an application provided as a part of implementation of the electronic device (such as a mobile phone). The third-party application is an application that may provide an internet protocol multimedia subsystem (internet protocol multimedia subsystem, IMS) connection of the third-party application. The third-party application may be pre-installed in the electronic device, or may be downloaded by the user and installed in the electronic device.

It should be noted that the electronic device in the embodiments of this application may be a mobile phone, a tablet computer, a desktop computer, a laptop computer, a handheld computer, a notebook computer, a personal computer (Personal Computer, PC), a netbook, a cellular phone, a personal digital assistant (personal digital assistant, PDA), a wearable device (for example, a smartwatch), a smart household device (for example, an internet protocol television (internet protocol television, IPTV)), a vehicle-mounted computer, a game console, an augmented reality (augmented reality, AR) device/a virtual reality (virtual reality, VR) device, or the like. A specific form of the electronic device is not specially limited in the embodiments.

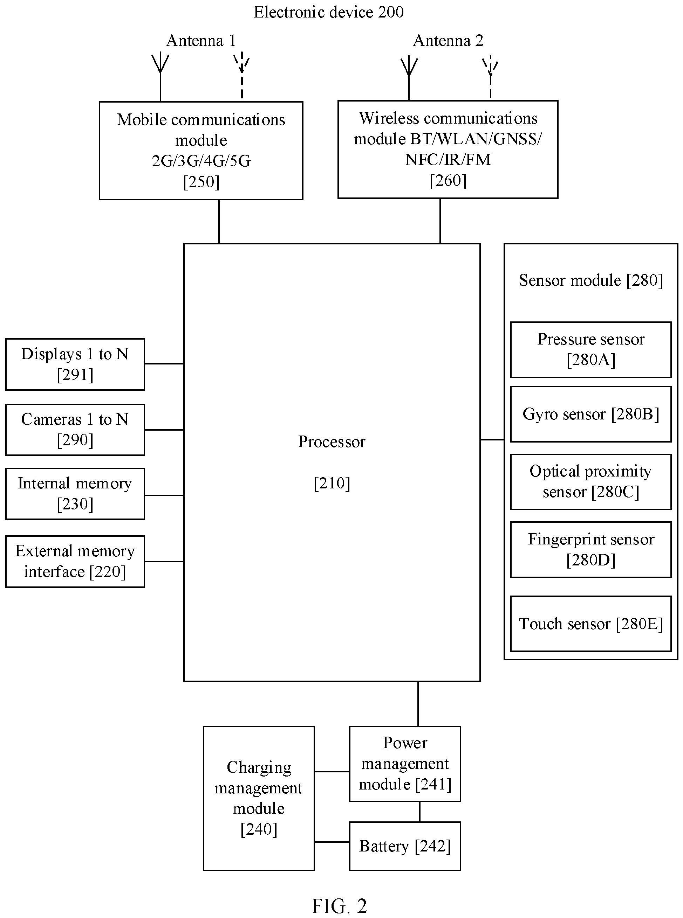

FIG. 2 is a schematic structural diagram of an electronic device 200 according to an embodiment of this application. The electronic device 200 may include a processor 210, an external memory interface 220, an internal memory 230, a charging management module 240, a power management module 241, a battery 242, an antenna 1, an antenna 2, a mobile communications module 250, a wireless communications module 260, a sensor module 280, a camera 290, a display 291, and the like. The sensor module 280 may include a pressure sensor 280A, a gyro sensor 280B, an optical proximity sensor 280C, a fingerprint sensor 280D, a touch sensor 280E, and the like.

It may be understood that the structure shown in this embodiment of this application does not constitute a specific limitation on the electronic device 200. In some other embodiments of this application, the electronic device 200 may include more or fewer components than those shown in the figure (for example, the electronic device 200 may further include a USB port, an audio module, a speaker, a receiver, and a microphone), or some components may be combined, or some components may be split, or different component arrangements may be used. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent devices, or may be integrated into one or more processors.

The controller may be a nerve center and a command center of the electronic device 200. The controller may generate an operation control signal based on an instruction operation code and a time sequence signal, to complete control of instruction reading and instruction execution.

A memory may be further disposed in the processor 210, and is configured to store an instruction and data. In some embodiments, the memory in the processor 210 is a cache memory. The memory may store an instruction or data that is just used or cyclically used by the processor 210. If the processor 210 needs to use the instruction or the data again, the processor 210 may directly call the instruction or the data from the memory. This avoids repeated access and reduces a waiting time of the processor 210. Therefore, system efficiency is improved.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 240 is configured to receive a charging input from a charger. The charger may be a wireless charger or a wired charger. The charging management module 240 may further supply power to the electronic device through the power management module 241 while charging the battery 242.

The power management module 241 is configured to connect the battery 242 and the charging management module 240 to the processor 210. The power management module 241 receives an input from the battery 242 and/or the charging management module 240, and supplies power to the processor 210, the internal memory 230, an external memory, the display 291, the camera 290, the wireless communications module 260, and the like. In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented through the antenna 1, the antenna 2, the mobile communications module 250, the wireless communications module 260, the modem processor, the baseband processor, and the like.

The antenna 1 and the antenna 2 are configured to transmit and receive electromagnetic wave signals.

The mobile communications module 250 can provide a solution, applied to the electronic device 200, to wireless communication including 2G/3G/4G/5G, and the like. The mobile communications module 250 may receive an electromagnetic wave by using the antenna 1, perform processing such as filtering or amplification on the received electromagnetic wave, and transfer the electromagnetic wave to the modem processor for demodulation. The mobile communications module 250 may further amplify a signal modulated by the modem processor, and convert the signal into an electromagnetic wave for radiation by using the antenna 1. In some embodiments, at least some function modules in the mobile communications module 250 may be disposed in the processor 210. In some embodiments, at least some function modules in the mobile communications module 250 may be disposed in a same device as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (not limited to the speaker, the receiver, or the like), or displays an image or a video through the display 291. In some embodiments, the modem processor may be an independent component. In some other embodiments, the modem processor may be independent of the processor 210, and is disposed in a same device as the mobile communications module 250 or another function module.

The wireless communications module 260 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communications module 260 may be one or more devices integrating at least one communications processing module. The wireless communications module 260 receives an electromagnetic wave through the antenna 2, performs frequency modulation and filtering processing on an electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation through the antenna 2.

In some embodiments, the antenna 1 and the mobile communications module 250 in the electronic device 200 are coupled, and the antenna 2 and the wireless communications module 260 in the electronic device 200 are coupled, so that the electronic device 200 can communicate with a network and another device by using a wireless communications technology.

The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 200 implements a display function through the GPU, the display 291, the application processor, and the like. The GPU is a microprocessor for image processing, and is connected to the display 291 and the application processor. The GPU is configured to: perform mathematical and geometric calculation, and render an image. The processor 210 may include one or more GPUs that execute a program instruction to generate or change display information.

The display 291 is configured to display an image, a video, and the like. The display 291 includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device 200 may include one or N displays 291, where N is a positive integer greater than 1.

For example, in this embodiment of this application, the display 291 may be configured to display an interface of an application that includes an input box (for example, an interface of Amazon) and an interface of an input method application, and may be further configured to display candidate content on the interface of the input method application.

The electronic device 200 can implement a photographing function through the ISP, the camera 290, the video codec, the GPU, the display 291, the application processor, and the like.

The ISP is configured to process data fed back by the camera 290. In some embodiments, the ISP may be disposed in the camera 290. The camera 290 is configured to capture a static image or a video. In some embodiments, the electronic device 200 may include one or N cameras 290, where N is a positive integer greater than 1.

The digital signal processor is configured to process a digital signal, and may process another digital signal in addition to the digital image signal. The video codec is configured to compress or decompress a digital video. The electronic device 200 may support one or more video codecs. In this way, the electronic device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU can implement applications such as intelligent cognition of the electronic device 200, such as image recognition, facial recognition, speech recognition, and text understanding.

The external memory interface 220 may be configured to connect to an external storage card such as a micro SD card, to extend a storage capability of the electronic device 200. The external storage card communicates with the processor 210 through the external memory interface 220, to implement a data storage function.

The internal memory 230 may be configured to store computer-executable program code. The executable program code includes instructions. The processor 210 performs various function applications of the electronic device 200 and data processing by running the instruction stored in the internal memory 230. The internal memory 230 may include a program storage area and a data storage area. The program storage area may store an operating system, an application required by at least one function (such as an input method application, a sound playing function, or an image playing function), and the like. The data storage area may store data (for example, audio data or an address book) created during use of the electronic device 200, and the like. In addition, the internal memory 230 may include a high-speed random access memory, and may further include a non-volatile memory such as at least one magnetic disk storage device, a flash memory, or a universal flash storage (universal flash storage, UFS).

For example, in this embodiment of this application, the internal memory 230 may be configured to store content that is specified by an application having an input box and that needs to be prompted in the input box. In some embodiments, the content that is specified by the application having the input box and that needs to be prompted in the input box may be obtained from a server when the electronic device 200 downloads the application from the server and stored in the internal memory 230. Alternatively, when the application is a third-party application pre-installed in the electronic device 200 or a system application of the electronic device 200, the content that is specified by the application and that needs to be prompted in the input box may be configured in the internal memory 230 when the electronic device 200 is delivered from the factory. Alternatively, the content that is specified by the application and that needs to be prompted in the input box may be obtained by the electronic device 200 based on historical inputs of a user in the input box of the application and stored in the internal memory 230.

The pressure sensor 280A is configured to sense a pressure signal, and can convert the pressure signal into an electrical signal. In some embodiments, the pressure sensor 280A may be disposed on the display 291. There are many types of pressure sensors 280A such as a resistive pressure sensor, an inductive pressure sensor, and a capacitive pressure sensor. Capacitance between electrodes changes when a force is performed on the pressure sensor 280A. The electronic device 200 determines pressure intensity based on the change of the capacitance. When a touch operation is performed on the display 291, the electronic device 200 detects intensity of the touch operation based on the pressure sensor 280A. The electronic device 200 may also calculate a touch location based on a detection signal of the pressure sensor 280A. In some embodiments, touch operations that are performed in a same touch location but have different touch operation strength may correspond to different operation instructions. For example, when a touch operation whose touch operation strength is less than a first pressure threshold is performed on an SMS message application icon, an instruction for viewing an SMS message is executed. When a touch operation whose touch operation intensity is greater than or equal to the first pressure threshold is performed on an SMS message application icon, an instruction for creating a new SMS message is executed.

The gyro sensor 280B may be configured to determine a motion posture of the electronic device 200. The gyro sensor 280B may also be used in navigation and somatic game scenarios. The electronic device 200 may detect, through the optical proximity sensor 280C, that the user holds the electronic device 200 close to an ear for a call, so that the electronic device 200 automatically turns off a screen to save power. The optical proximity sensor 280C may also be used in a smart cover mode or a pocket mode to automatically perform screen unlocking or locking. The fingerprint sensor 280D is configured to collect a fingerprint. The electronic device 200 may use a feature of the collected fingerprint to implement fingerprint-based unlocking, application lock access, fingerprint-based photographing, fingerprint-based call answering, and the like.

The touch sensor 280E is also referred to as a "touch panel". The touch sensor 280E may be disposed on the display 291, and the touch sensor 280E and the display 291 form a touchscreen. The touch sensor 280E is configured to detect a touch operation performed on or near the touch sensor 280E. The touch sensor may transfer the detected touch operation to the application processor, to determine a type of a touch event. A visual output related to the touch operation may be provided by the display 291. In some other embodiments, the touch sensor 280E may alternatively be disposed on a surface of the electronic device 200 at a location different from a location of the display 291. For example, in this embodiment of this application, the touch sensor 280E may be configured to detect a touch operation performed by the user on the input box included in the interface of the application, and transfer the detected touch operation to the application processor, to display the interface of the input method application.

In addition, a software system running on the electronic device 200 may be a Linux kernel-based operating system such as an Android system, an Ubuntu system, or a Tizen system, or may be a desktop operating system such as Windows, Mac OS, or Linux, or may be a Windows phone system, an IOS system, a BlackBerry system, or a Symbian system. The software system may use a layered architecture, an event-driven architecture, a microkernel architecture, a micro service architecture, or a cloud architecture. In this embodiment of this application, an Android system with a layered architecture is used as an example to describe a software structure of the electronic device 200.

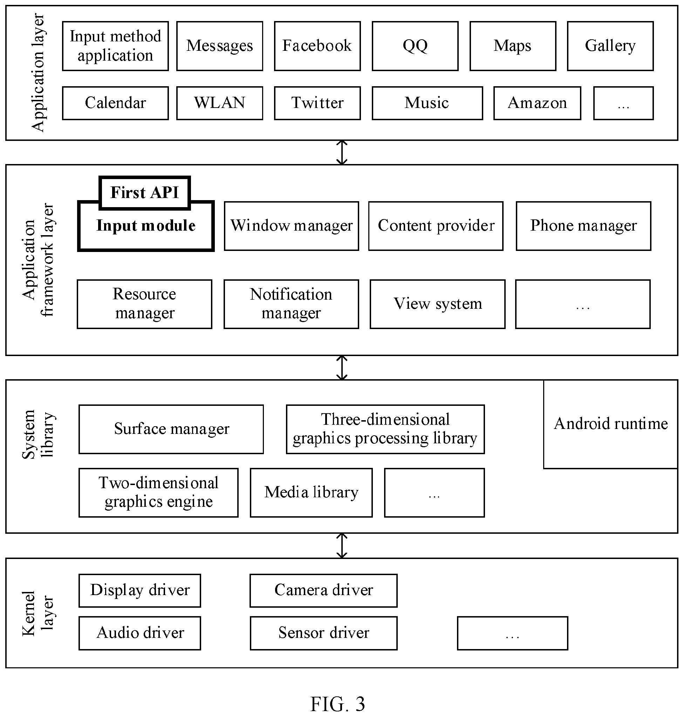

FIG. 3 is a block diagram of the software structure of the electronic device 200 according to an embodiment of this application. The layered architecture divides software into several layers, and the layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as "Input method", "Messages", "Facebook", "QQ", "Maps", "Gallery", "Calendar", "WLAN", "Twitter (Twitter)", "Music", and "Amazon". In this embodiment, the applications such as "Messages", "Facebook", "QQ", "Maps", "Gallery", "Calendar", "WLAN", "Twitter (Twitter)", "Music", and "Amazon" each may be an application having an input box in the embodiments of this application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and received, a browsing history and bookmarks, a phone book, and the like. The view system includes visual controls, such as a control for displaying a text and a control for displaying an image.

The view system may be configured to construct an application. A display interface may include one or more views. For example, in this embodiment of this application, the display interface including an input box may include a word display view and a picture display view.

The phone manager is configured to provide a communication function of the electronic device 200, for example, management of a call status (including answering or declining). The resource manager provides, for an application, various resources such as a localized character string, an icon, an image, a layout file, and a video file. The notification manager enables an application to display notification information in a status bar, and may be configured to convey a notification type message. The notification manager may automatically disappear after a short pause without user interaction. Alternatively, the notification manager may be a notification that appears in a top status bar of the system in a form of a graph or a scroll bar text, or may be a notification that appears on the screen in a form of a dialog window.

In this embodiment of this application, the application framework layer may further include an input module. The input module is configured to provide an input function of the electronic device 200, for example, invoking an input method application at the application layer.

For example, when a user selects an input box of an application having the input box, the application framework layer of the electronic device may detect a corresponding touch event (on touch event). In response to the touch event, the application framework layer may notify the input module to call the input method application, for example, apply a transfer function showSoftInput(View view, int flags) to the input module. Then, the input module may call the input method application, such as apply the transfer function show SoftInput(View view, int flags) to the input method. The input method application may call a function onStartInputView(EditorInfo info, boolean restarting), to display an interface of the input method application.

The application framework layer may further provide a first API for the application at the application layer. The first API may be an API of the input module, and may be configured to implement a function of an information channel. The electronic device 200 may transmit, to a storage area of the input method application through the first API, content that is specified by the application having the input box and that needs to be prompted in the input box.

The first API is set at the application framework layer, so that each application that has an input box and that is located at the application layer may implement a corresponding function by calling the interface. For example, the application transmits, to the input method application, content that is specified by the application and that needs to be prompted in the input box of the application. In this way, a developer does not need to negotiate with a developer of each application about an interface, but can implement a corresponding function through one interface.

In some embodiments, the first API is implemented in a plurality of manners. Implementation 1: An API that is in an existing input module and that is used to implement an information channel function may be reused. For example, an existing function public Bundle getInputExtras(boolean create) is used to implement the first API. Bundle getInputExtras indicates content that is specified by an application having an input box and that needs to be prompted to the user in the input box, and may be presented in a form of a list (list). Implementation 2: An API may be newly added to implement an information channel function. In other words, a function is newly added to implement the first API.

Certainly, in this embodiment of this application, the electronic device 200 may not transmit, to the storage area of the input method application through the first API provided by the application framework layer, the content that is specified by the application having the input box and that needs to be prompted in the input box, but directly transmits, to the storage area of the input method application at the application layer, the content that is specified by the application having the input box and that needs to be prompted in the input box.

The Android runtime includes a core library and a virtual machine. The Android runtime is responsible for scheduling and management of the Android system. The core library includes two parts: a function that needs to be called in java language, and a core library of Android. The application layer and the application framework layer run on the virtual machine.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playback and recording in a plurality of commonly used audio and video formats, a static image file, and the like. The media library may support a plurality of audio and video coding formats such as MPEG-4, H.264, MP3, AAC, AMR, JPG, and PNG. The three-dimensional graphics processing library is configured to implement three-dimensional graphics drawing, image rendering, compositing, layer processing, and the like. The 2D graphics engine is a drawing engine for 2D drawing.

The kernel layer is a layer between hardware and software. The kernel layer includes at least a display driver, a camera driver, an audio driver, and a sensor driver.

For example, all technical solutions in the following embodiments may be implemented in the electronic device 200 (for example, a mobile phone) that has the hardware architecture and the software architecture described above. The following describes in detail the input method candidate content recommendation method provided in the embodiments of this application with reference to accompanying drawings and application scenarios.

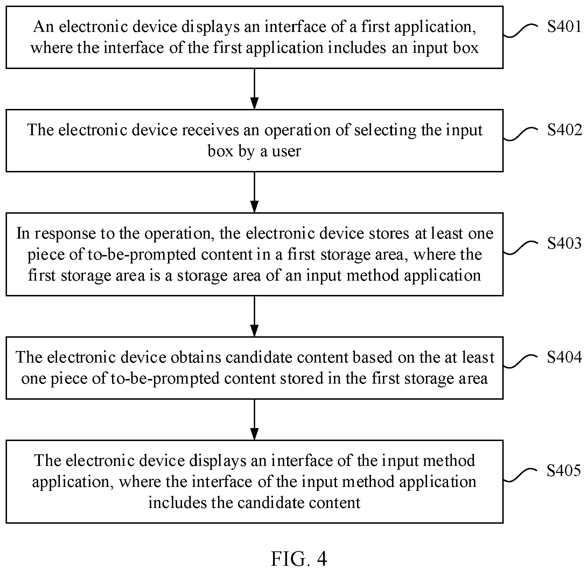

FIG. 4 is a schematic flowchart of an input method candidate content recommendation method according to an embodiment of this application. As shown in FIG. 4, the method may include S401 to S405.

S401: An electronic device displays an interface of a first application, where the interface of the first application includes an input box.

For example, the electronic device may include one or more applications. The first application may be an application having an input box in the one or more applications included in the electronic device. The first application may be a system application such as "messages" or "calendar", or may be a third-party application such as "Facebook", "Amazon", or "Music".

S402: The electronic device receives an operation of selecting the input box by a user.

The input box may be a first input box in this embodiment of this application. In some embodiments, the operation of selecting the input box by the user may be an operation of tapping the input box by the user.

S403: In response to the operation, the electronic device stores at least one piece of to-be-prompted content in a first storage area, where the first storage area is a storage area of an input method application.

The input method application may be a system application, or may be a third-party application. An input mode of the input method application may include one or more of the following: Pinyin input, Wubi input, handwriting input, voice input, and the like.

The electronic device may obtain a part of a storage area from a memory (for example, the internal memory 230) through division, so that the application included in the electronic device stores data. For example, the electronic device may obtain a storage area from the internal memory 230 through division for the input method application of the electronic device. For example, the storage area is referred to as the first storage area in this embodiment of this application. The first storage area may be configured to store related data of the input method application, for example, the at least one piece of to-be-prompted content, or a running parameter (for example, historical input data) and a setting parameter of the input method application.

When intending to input content into the input box of the first application, the user may select the input box of the first application, for example, tap the input box by the user. When receiving the operation of selecting the input box of the first application by the user (for example, the operation of tapping the input box of the first application by the user), the electronic device may determine that the user intends to input the content into the input box. In response to the operation, the electronic device may obtain the at least one piece of to-be-prompted content, and store the obtained at least one piece of to-be-prompted content in the first storage area. For example, with reference to the block diagram of the software structure of the electronic device 200 shown in FIG. 3, the electronic device may call the first API shown in FIG. 3 to transfer the at least one piece of to-be-prompted content to the storage area of the input method application, that is, call the first API to store the at least one piece of to-be-prompted content in the first storage area.

The to-be-prompted content may be content that is specified by the first application and that needs to be prompted in the input box, and the to-be-prompted content is content that the user may input into the input box of the first application, for example, a word, a punctuation mark, and a number.

In some embodiments, the to-be-prompted content may correspond to the first application. Generally, content input by the user into input boxes of different applications may be different. Therefore, when the electronic device receives an operation of selecting an input box of an application by the user, it indicates that the user intends to input content into the input box of the application. In this case, the electronic device may store to-be-prompted content corresponding to the application in the storage area of the input method application. For example, the electronic device may call the first API to store the to-be-prompted content corresponding to the application in the storage area of the input method application.

Generally, if the electronic device receives an operation of selecting an input box of an application A by the user, the electronic device may call the first API to store to-be-prompted content corresponding to the application A in the storage area of the input method application. If the electronic device receives an operation of selecting an input box of an application B by the user, the electronic device may call the first API to store to-be-prompted content corresponding to the application B in the storage area of the input method application.

For example, content input by the user into an input box of "Music" is usually words such as some song names and some singer names. Therefore, when receiving an operation of selecting the input box of "Music" by the user, the electronic device may call the first API to store to-be-prompted content corresponding to "Music", for example, words such as some song names and some singer names, in the storage area of the input method application. For another example, content input by the user into an input box of "Youku" is usually words such as some video file names. Therefore, when receiving an operation of selecting the input box of "Youku" by the user, the electronic device may call the first API to store to-be-prompted content corresponding to "Youku", for example, words such as some video file names, in the storage area of the input method application.

In some other embodiments, the to-be-prompted content may alternatively correspond to an input box of the first application that is selected by the user. In some cases, content input by the user in different input boxes of a same application may also be different. Therefore, when the electronic device receives an operation of selecting an input box of an application by the user, it indicates that the user intends to input content into the input box of the application. In this case, the electronic device may store to-be-prompted content corresponding to the input box of the application in the storage area of the input method application. For example, the electronic device may call the first API to store the to-be-prompted content corresponding to the input box of the application in the storage area of the input method application.

Generally, if the electronic device receives an operation of selecting an input box 1 of an application C by the user, the electronic device may call the first API to store to-be-prompted content corresponding to the input box 1 of the application C in the storage area of the input method application. If the electronic device receives an operation of selecting an input box 2 of the application C by the user, the electronic device may call the first API to store to-be-prompted content corresponding to the input box 2 of the application C in the storage area of the input method application.

For example, content input by the user into an input box 1 of "Amazon" is usually words such as some commodity names and some store names. Therefore, when receiving an operation of selecting the input box 1 of "Amazon" by the user, the electronic device may call the first API to store to-be-prompted content corresponding to the input box 1 of "Amazon", for example, words such as some commodity names and some store names, in the storage area of the input method application. For another example, content input by the user into an input box 2 of "Amazon" is usually some comments (for example, the comment may include a word and a punctuation mark). Therefore, when receiving an operation of selecting the input box 2 of "Amazon" by the user, the electronic device may call the first API to store to-be-prompted content corresponding to the input box 2 of "Amazon", for example, some comments, in the storage area of the input method application.

In this embodiment of this application, the electronic device may obtain the to-be-prompted content in the following manner.

Manner 1: The electronic device reads the to-be-prompted content from a second storage area.

The second storage area may be a storage area configured to store related data of the first application, for example, the content (that is, the to-be-prompted content) that is specified by the first application and that needs to be prompted in the input box. The electronic device may read the to-be-prompted content from the second storage area.

The electronic device may read the to-be-prompted content stored in the second storage area in the following manner: For example, the to-be-prompted content may be obtained by a server of the first application through prediction. The server of the first application may obtain, through prediction based on historical inputs of a large quantity of users, to-be-prompted content applicable to all users, or may obtain, through prediction based on historical outputs of different users, to-be-prompted content applicable to the users. If the first application includes one input box, the server may obtain a set of content (the set of content may include one or more pieces of content) for the first application through prediction, to serve as the to-be-prompted content. If the first application includes a plurality of input boxes, and content input by the user into different input boxes may be different, the server may obtain a set of content for each input box of the first application through prediction, to serve as to-be-prompted content corresponding to the input box.

The to-be-prompted content may alternatively be default content. When downloading the first application, the electronic device may obtain the to-be-prompted content from the server of the first application, and store the to-be-prompted content in the second storage area. If the first application is a system application, or a third-party application that has been installed in the electronic device when the electronic device is delivered from the factory, the to-be-prompted content may be stored in the second storage area when the electronic device is delivered from the factory.

For another example, the to-be-prompted content may be obtained by the electronic device through prediction. If the first application includes one input box, the electronic device may obtain the to-be-prompted content based on historical inputs of the user in the input box of the first application, and store the to-be-prompted content in the second storage area. If the first application includes a plurality of input boxes, and content input by the user into different input boxes is different, the electronic device may obtain, based on historical inputs of the user in each input box of the first application, to-be-prompted content corresponding to the input box, and store the to-be-prompted content in the second storage area.

It should be noted that, in a possible implementation, the electronic device may obtain a second storage area through division for each first application of the electronic device, so that the first application of the electronic device stores related data. That is, the second storage area is a storage area that is obtained by the electronic device from the memory (for example, the internal memory 230) through division for the first application, and is only used to store the related data of the first application.

In this implementation, if the first application includes a plurality of input boxes, and content entered by the user into different input boxes is different, that is, if the to-be-prompted content corresponds to an input box of the first application that is selected by the user, the electronic device may associatively store the to-be-prompted content with the input box (for example, an identifier of the input box) of the first application.

For example, the application C includes two input boxes: the input box 1 and the input box 2, and content input by the user into the input box 1 and the input box 2 is different. As shown in Table 1, the electronic device may associatively store the input box 1 of the first application with to-be-prompted content c1, to-be-prompted content c2, ..., and to-be-prompted content cm in the second storage area, and associatively store the input box 2 of the first application with to-be-prompted content c1', to-be-prompted content c2', ..., and to-be-prompted content cn in the second storage area. In this way, when receiving an operation of selecting the input box 1 or the input box 2 of the application C by the user, the electronic device may read corresponding to-be-prompted content from the second storage area according to Table 1.

**Table 1**

| Input box | To-be-prompted content |
|---|---|
| Input box 1 | To-be-prompted content c1, to-be-prompted content c2, ..., and to-be-prompted content cm |
| Input box 2 | To-be-prompted content c1', to-be-prompted content c2', ..., and to-be-prompted content cn |

In another possible implementation, the second storage area may alternatively be a public storage area obtained by the electronic device from the memory through division for a plurality of first applications (for example, the application A, the application B, and the application C). That is, the second storage area may be configured to store related data of the plurality of first applications.

In this implementation, if the first application includes one input box, the electronic device may associatively store the to-be-prompted content with the first application (for example, an identifier of the first application) in the second storage area. If the first application includes a plurality of input boxes, and content input by the user into different input boxes may be different, the electronic device may further associatively store the to-be-prompted content with the input box (for example, an identifier of the input box) of the first application in the second storage area.

For example, the second storage area is a public storage area obtained by the electronic device through division for the application A, the application B, and the application C. The application A and the application B each include only one input box. The application C includes two input boxes: the input box 1 and the input box 2, and content input by the user into the input box 1 and the input box 2 is different. As shown in Table 2, the electronic device may associatively store the application A with to-be-prompted content a1, to-be-prompted content a2, ..., and to-be-prompted content ai in the second storage area, associatively store the application B with to-be-prompted content b1, to-be-prompted content b2, ..., and to-be-prompted content bj in the second storage area, associatively store the input box 1 of the application C with to-be-prompted content c1, to-be-prompted content c2, ..., and to-be-prompted content cm in the second storage area, and associatively store the input box 2 of the application C with to-be-prompted content c1', to-be-prompted content c2', ..., and to-be-prompted content cn in the second storage area. In this way, when receiving an operation of selecting the input box of the application A, the input box of the application B, the input box 1 of the application C, or the input box 2 of the application C by the user, the electronic device may read corresponding to-be-prompted content from the second storage area according to Table 2.

**Table 2**

| Application | Input box | To-be-prompted content |
|---|---|---|
| Application A | Null (null) | To-be-prompted content a1, to-be-prompted content a2, ..., and to-be-prompted content ai |
| Application B | Null | To-be-prompted content b 1, to-be-prompted content b2, ..., and to-be-prompted content bj |
| Application C | Input box 1 | To-be-prompted content c1, to-be-prompted content c2, ..., and to-be-prompted content cm |
| | Input box 2 | To-be-prompted content c1', to-be-prompted content c2', ..., and to-be-prompted content cn |

Manner 2: The electronic device may send a request message to a server of the first application, and receive a response message from the server of the first application, where the response message may include the to-be-prompted content.

The server of the first application may obtain the to-be-prompted content through prediction. Descriptions of obtaining the to-be-prompted content by the server through prediction are the same as the descriptions in the foregoing manner 1, and details are not described herein again. In addition, when different input boxes of the first application correspond to different to-be-prompted content, in this implementation, the request message sent by the electronic device to the server of the first application may carry an identifier of an input box selected by the user, so that the server can return to-be-prompted content corresponding to the input box to the electronic device.

Manner 3: The electronic device may obtain the to-be-prompted content from the interface of the first application that is displayed in S401.

The interface of the first application that is displayed in S401 may include a plurality of pieces of content, for example, a word, or content including a word and a punctuation mark. The electronic device may obtain one or more pieces of content included in the interface as the to-be-prompted content. For example, when the user uses "Youku" of the electronic device to play a video, if the user opens a bullet screen, a video playing interface includes a plurality of comments (for example, the comment may include a word and a punctuation mark). The electronic device may use the comment included in the video playing interface as the to-be-prompted content.

In addition, in Manner 1 and Manner 2, the to-be-prompted content may be fixed, or may be periodically updated. For example, the electronic device or the server of the first application may update the to-be-prompted content based on content input by the user into the input box of the first application within a period of time.

The following describes S401 to S403 with reference to specific examples.

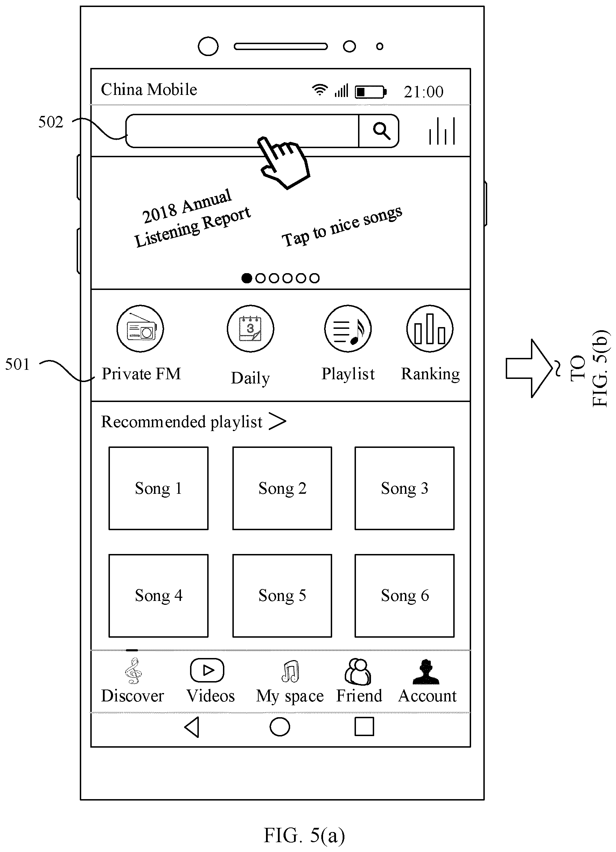

For example, with reference to FIG. 5(a) to FIG. 5(d), the first application is "Music", the to-be-prompted content corresponds to "Music", for example, the to-be-prompted content is words such as a song name and a singer name, and the electronic device obtains the to-be-prompted content in Manner 1. The electronic device includes "Music" and "Input method". It is assumed that, when "Music" is downloaded, the electronic device obtains, from a server of "Music", to-be-prompted content corresponding to "Music", and stores the to-be-prompted content in the second storage area (for example, the second storage area is a storage area of "Music").

When the user wants to use "Music" to play music, the user may perform an operation of tapping an icon of "Music" that is displayed on a home screen of the electronic device. As shown in FIG. 5(a), in response to the tapping operation, the electronic device may display an interface 501 of "Music". The interface 501 of "Music" includes an input box 502. If the user intends to input a word into the input box 502 to search for a song that the user wants to listen to, the user may select the input box 502, for example, tap the input box 502. In response to the operation of selecting the input box 502 by the user, the electronic device may read the to-be-prompted content corresponding to "Music" from the second storage area, and call the first API to store the to-be-prompted content corresponding to "Music" in the storage area of the input method application, that is, the first storage area.

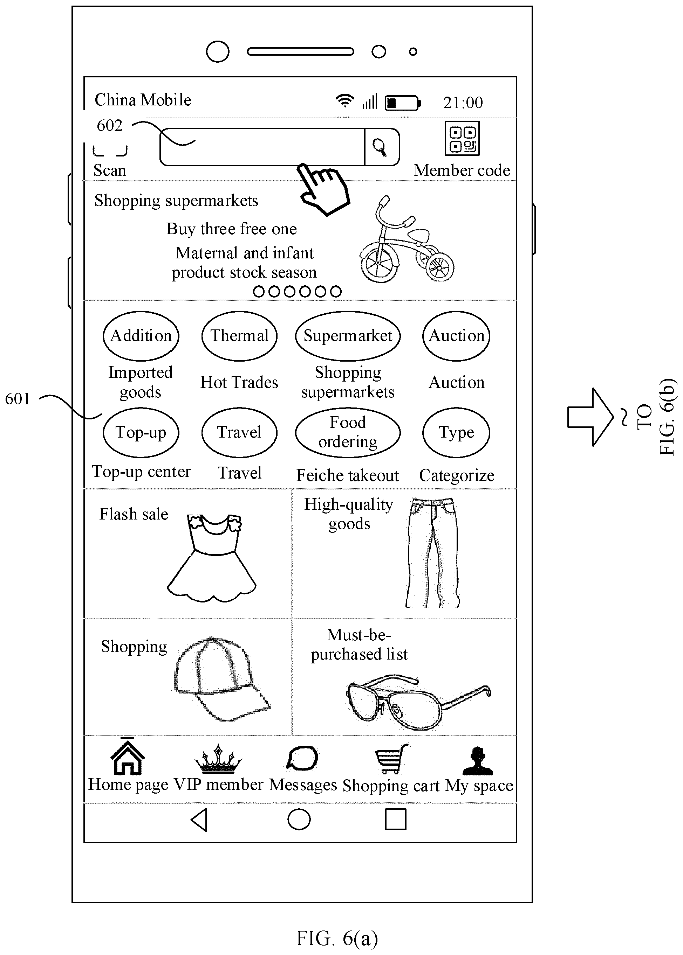

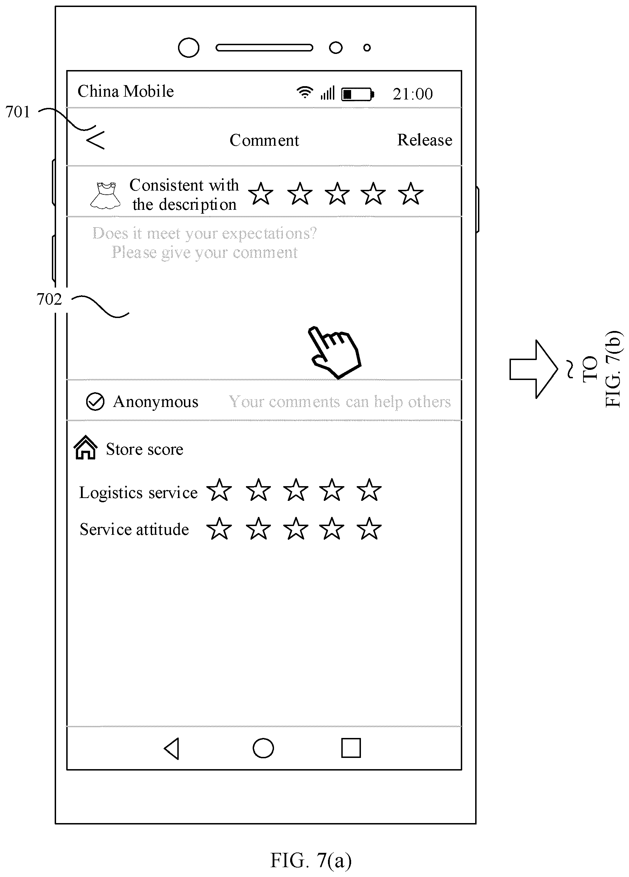

For another example, with reference to FIG. 6(a) to FIG. 6(c) and FIG. 7(a) to FIG. 7(c), the first application is "Amazon", the to-be-prompted content corresponds to an input box of "Amazon", that is, different input boxes of "Amazon" correspond to different to-be-prompted content, and the electronic device obtains the to-be-prompted content in Manner 2. The electronic device includes "Amazon" and "Input method".

When the user wants to use "Amazon" for shopping, the user may perform an operation of tapping an icon of "Amazon" that is displayed on a home screen of the electronic device. As shown in FIG. 6(a), in response to the tapping operation, the electronic device may display an interface 601 of "Amazon". The interface 601 of "Amazon" includes an input box 602. The user may input a commodity name or a store name into the input box 602 to search for a commodity that the user wants to purchase. If the user intends to input a word into the input box 602 to search for a commodity that the user wants to purchase, the user may select the input box 602, for example, tap the input box 602. In response to the operation of selecting the input box 602 by the user, the electronic device may send a request message to a server of "Amazon", where the request message includes an identifier of the input box 602. After receiving the request message that includes the identifier of the input box 602, the server of "Amazon" may add to-be-prompted content corresponding to the input box 602, for example, some words such as commodity names and store names, to a response message and then send the response message to the electronic device. After receiving the response message, the electronic device may call the first API to store the to-be-prompted content that corresponds to the input box 602 and that is included in the response message in the storage area of the input method application, that is, the first storage area.

After the user completes the shopping and confirms the receipt, the user may comment on the purchased commodity. As shown in FIG. 7(a), the electronic device may display a comment interface 701. The comment interface 701 includes an input box 702. The user may input a comment into the input box 702 to comment on the purchased commodity. When the user intends to input content into the input box 702 to comment on the purchased commodity, the user may select the input box 702, for example, tap the input box 702. In response to the operation of selecting the input box 702 by the user, the electronic device may send a request message to a server of "Amazon", where the request message includes an identifier of the input box 702. After receiving the request message that includes the identifier of the input box 702, the server of "Amazon" may add to-be-prompted content corresponding to the input box 702, for example, some common comments (for example, the comment may include a word and a punctuation mark), to a response message and then send the response message to the electronic device. After receiving the response message, the electronic device may call the first API to store the to-be-prompted content that corresponds to the input box 702 and that is included in the response message in the storage area of the input method application, that is, the first storage area.

For still another example, with reference to FIG. 8(a) to FIG. 8(c), the first application is "Youku", the to-be-prompted content corresponds to an input box of "Youku", that is, different input boxes of "Youku" correspond to different to-be-prompted content, and the electronic device obtains the to-be-prompted content in Manner 3. The electronic device includes "Youku" and "Input method".

When the user uses "Youku" to play a video, as shown in FIG. 8(a), the electronic device may display a video playing interface 801. When a bullet screen is enabled, the video playing interface 801 may include a plurality of comments on a currently played video. The video playing interface 801 may further include an input box 802. The user may perform an operation of tapping the input box 802, to comment on the currently played video. If the user intends to comment on the currently played video, the user may select the input box 802. In response to the operation of selecting the input box 802 by the user, the electronic device may use the plurality of comments included in the video playing interface 801 as to-be-prompted content corresponding to the input box 802. After obtaining the to-be-prompted content corresponding to the input box 802, the electronic device may call the first API to store the obtained to-be-prompted content corresponding to the input box 802 in the storage area of the input method application, that is, the first storage area.

It should be noted that, in Manner 1, in response to the operation in S402, the electronic device may not read the at least one piece of to-be-prompted content from the second storage area and then store the at least one piece of to-be-prompted content in the first storage area, but directly reads the corresponding to-be-prompted content from the second storage area and then obtains candidate content based on the read to-be-prompted content. For descriptions of obtaining the candidate content, refer to descriptions of corresponding content in S404.

S404: The electronic device obtains candidate content based on the at least one piece of to-be-prompted content stored in the first storage area.

The candidate content may be first candidate content in this embodiment of this application. For example, the electronic device may read the at least one piece of to-be-prompted content from the first storage area, and parse the read at least one piece of to-be-prompted content, to obtain the candidate content.

In this embodiment of this application, the electronic device may obtain the candidate content in the following manner.

Manner 1: The electronic device may completely restore the to-be-prompted content read from the first storage area, to obtain the candidate content. That is, to-be-prompted content read from the first storage area is candidate content obtained by the electronic device.

For example, it is assumed that the at least one piece of to-be-prompted content in the first storage area is stored in a form of an array. That is, the electronic device calls the first API to transfer, to the first storage area in a form of an array, the content that is specified by the first application and that needs to be prompted in the input box.

For example, with reference to the example shown in FIG. 7(a) to FIG. 7(c), the electronic device calls the first API to transfer, to the first storage area in a form of an array, specified content that needs to be prompted in the input box 702. Details are as follows:

```
          [
            "Cheap and easy to use, nice!",
            "Arrived the next day, reliable!",
            "Recommended by a friend, really good",
            "Nice quality, worth the purchase"
          ]
```

The specified content that needs to be prompted in the input box 702 is some comments. The electronic device parses the array to restore the to-be-prompted content: "Cheap and easy to use, nice!", "Arrived the next day, reliable!", "Recommended by a friend, really good", and "Nice quality, worth the purchase". The restored to-be-prompted content is the candidate content. That is, the candidate content obtained by the electronic device is: "Cheap and easy to use, nice!", "Arrived the next day, reliable!", "Recommended by a friend, really good", and "Nice quality, worth the purchase".

For another example, it is assumed that the at least one piece of to-be-prompted content in the first storage area is stored in a form of a character string. That is, the electronic device calls the first API to transfer, to the first storage area in a form of a character string, the content that is specified by the first application and that needs to be prompted in the input box. The content that is specified by the first application and that needs to be prompted in the input box is the to-be-prompted content. Different to-be-prompted content is spliced by using a predetermined symbol. The predetermined symbol may be a single character, or may be a character string including a plurality of characters.

For example, the predetermined symbol is "∼". With reference to the example shown in FIG. 6(a) to FIG. 6(c), the electronic device calls the first API to transfer, to the first storage area in a form of a character string, specified content that needs to be prompted in the input box 602, for example, " [Shirt ∼ Shoulder bag ∼ Pants ∼ Thermos cup]". The electronic device divides the character string according to the symbol "∼", to restore the to-be-prompted content: "Shirt", "Shoulder bag", "Pants", and "Thermos cup". The restored to-be-prompted content is the candidate content. That is, the candidate content obtained by the electronic device is: "Shirt", "Shoulder bag", "Pants", and "Thermos cup".

Optionally, after completely restoring the to-be-prompted content read from the first storage area, the electronic device may further perform data analysis and extraction on the restored to-be-prompted content, and then use the to-be-prompted content obtained after the data analysis and extraction as the candidate content.

Data analysis and extraction may be performed in the following manners: Manner 1 and Manner 2.

Manner 1: Extract a keyword in the restored to-be-prompted content, and use the extracted keyword as the candidate content. For example, with reference to the example shown in FIG. 7(a) to FIG. 7(c), the electronic device calls the first API to transfer, to the first storage area, specified content that needs to be prompted in the input box 702: "very tasty package", "fresh and moderate taste", and "crispy and quite satisfactory". The electronic device may restore the to-be-prompted content, and parse the restored to-be-prompted content. Then, the electronic device may extract keywords such as "very tasty", "fresh taste", "crispy", and "quite satisfactory" from the to-be-prompted content, and use the keywords as the candidate content.

Manner 2: Extract a common part (the common part may also be considered as a keyword) of the restored to-be-prompted content, and use the extracted common part as the candidate content. For example, with reference to the example shown in FIG. 8(a) to FIG. 8(c), the electronic device calls the first API to transfer, to the first storage area in a form of an array, specified content that needs to be prompted in the input box 802. Details are as follows:

```
         [
            "Xiaohua is so cute",
            "Xiaohua and Xiaoming have always been good friends",
            "Xiaoming is doing very well",
            "Xiaohua did a good job"
         ]
```

The electronic device may parse the array to restore the to-be-prompted content: "Xiaohua is so cute", "Xiaohua and Xiaoming have always been good friends", "Xiaoming is doing very well", and "Xiaohua did a good job". Then, the electronic device may extract a common part, such as "Xiaohua" and "Xiaoming", from the restored to-be-prompted content. The electronic device uses the extracted part "Xiaohua" and "Xiaoming" as the candidate content.

Manner 2: An interface of the first API may define that the to-be-prompted content includes a plurality of layers of keywords, and there is a cascading relationship between different layers of keywords. For example, the to-be-prompted content includes a first-layer keyword and a second-layer keyword, and there is a cascading relationship between the first-layer keyword and the second-layer keyword. The electronic device may parse, according to the definition of the interface of the first API, the to-be-prompted content read from the first storage area, to obtain the first-layer keyword in the to-be-prompted content. Then, the first-layer keyword is used as the candidate content. For example, with reference to the example shown in FIG. 5(a) to FIG. 5(d), the electronic device calls the first API to transfer, to the first storage area, specified content that needs to be prompted in the input box 502. Details are as follows:

```
           [
            "Singer ZC": [
                         "Representative song a",
                         "Representative song b",
                         "Representative song c"
           ],
            "Singer LY": [
                         "Representative song 1",
                         "Representative song 2"
          ]
```

The to-be-prompted content includes two layers of keywords. A first-layer keyword includes "Singer ZC" and "Singer LY", and a second-layer keyword includes "Representative song a", "Representative song b", "Representative song c", "Representative song 1", and "Representative song 2". There is a cascading relationship between the first-layer keyword "Singer ZC" and the second-layer keyword "Representative song a", "Representative song b", and "Representative song c". There is a cascading relationship between the first-layer keyword "Singer LY" and the second-layer keyword "Representative song 1" and "Representative song 2". The electronic device may parse, according to the definition of the interface of the first API, the to-be-prompted content read from the first storage area, to obtain the first-layer keyword in the to-be-prompted content: "Singer ZC" and "Singer LY". Then, the electronic device may use the first-layer keyword "Singer ZC" and "Singer LY" as the candidate content.

In S403 and S404, in response to the operation in S402, the electronic device first stores the to-be-prompted content in the first storage area (for example, calls the first API to store the to-be-prompted content in the first storage area), and then obtains the candidate content based on the to-be-prompted content stored in the first storage area. Certainly, in response to the operation in S402, the electronic device may alternatively not store the to-be-prompted content in the first storage area, but directly obtains the candidate content based on the at least one piece of to-be-prompted content obtained by calling the first API. For example, after obtaining the to-be-prompted content (for a manner of obtaining the to-be-prompted content, refer to Manner 1, Manner 2, or Manner 3 in S403), the first application of the electronic device may call the first API to transmit the to-be-prompted content to the input method application, so that the input method application of the electronic device can obtain the candidate content based on the to-be-prompted content.

S405: The electronic device displays an interface of the input method application, where the interface of the input method application includes the candidate content.

In response to the operation of selecting the input box by the user in S402, the electronic device may further call the input method application of the electronic device. For example, an input module at an application framework layer of the electronic device may place the input method application in an active process state. The electronic device may display the interface of the input method application. In this embodiment of this application, the interface of the input method application includes the candidate content obtained in S404. In this way, the candidate content displayed after the input method application is started can better meet a requirement of the user, and the user may directly select the candidate content in the interface of the input method application that is presented after the input method application is started, to complete the input.

For example, with reference to the examples in FIG. 5(a) to FIG. 5(d) and S404, after the electronic device receives the operation of selecting the input box 502 by the user, as shown in FIG. 5(b), after calling the input method application, the electronic device may display the interface 503 of the input method application. The interface 503 of the input method application includes candidate content 504: "Singer ZC" and "Singer LY". If content that the user intends to input is "Singer LY", as shown in FIG. 5(b), the user may directly select the candidate content "Singer LY" (for example, tap the candidate content "Singer LY") included in the interface 503 of the input method application, to complete the input.

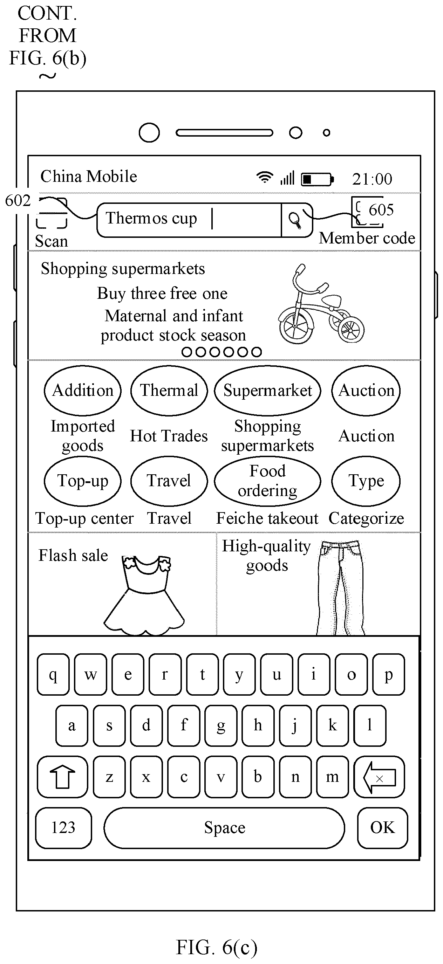

With reference to the examples in FIG. 6(a) to FIG. 6(c) and S404, after the electronic device receives the operation of selecting the input box 602 by the user, as shown in FIG. 6(b), after calling the input method application, the electronic device may display the interface 603 of the input method application. The interface 603 of the input method application includes candidate content 604: "Shirt", "Shoulder bag", "Pants", and "Thermos cup". If a commodity name that the user intends to search for is "Thermos cup", as shown in FIG. 6(b), the user may directly select the candidate content "Thermos cup" included in the interface 603 of the input method application. As shown in FIG. 6(c), in response to the operation of selecting (for example, tapping) the candidate content "Thermos cup" by the user, "Thermos cup" may be filled into the input box 602, to complete the input. In this case, the user taps a search button 605 to complete the search.

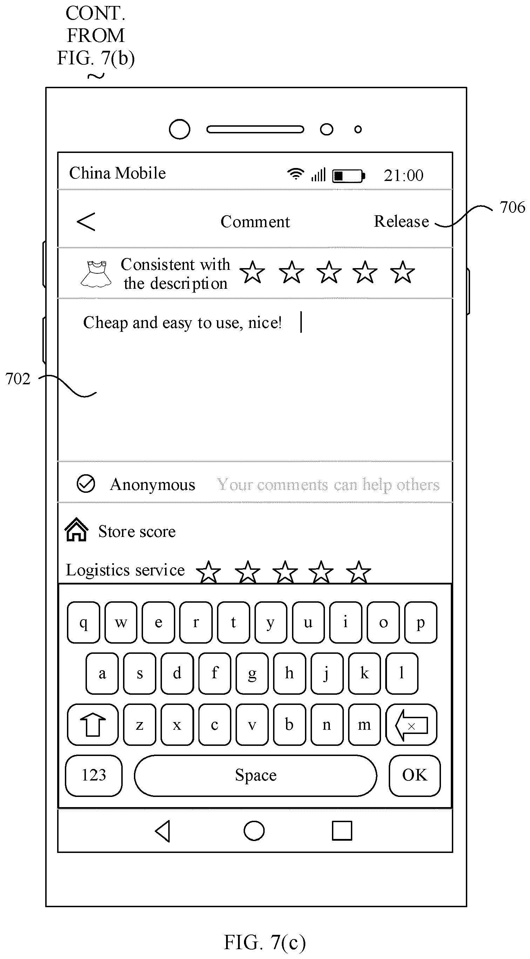

With reference to the examples in FIG. 7(a) to FIG. 7(c) and S404, after the electronic device receives the operation of selecting the input box 702 by the user, as shown in FIG. 7(b), after calling the input method application, the electronic device may display the interface 703 of the input method application. The interface 703 of the input method application includes candidate content. If all candidate content obtained by the electronic device cannot be displayed in the current interface of the input method application, some candidate content 704 may be displayed, for example, "Cheap and easy to use, nice!" and "Arrived the next day, reliable!". The electronic device may further display a control 705. By tapping the control 705, the user may view all the candidate content, that is, "Cheap and easy to use, nice!", "Arrived the next day, reliable!", "Recommended by a friend, really good", and "Nice quality, worth the purchase". If a comment that the user intends to input is "Cheap and easy to use, nice!", as shown in FIG. 7(b), the user may directly select the candidate content "Cheap and easy to use, nice!" included in the interface 703 of the input method application (for example, tap the candidate content "Cheap and easy to use, nice! "). As shown in FIG. 7(c), in response to the operation of selecting (for example, tapping) the candidate content "Cheap and easy to use, nice!" by the user, "Cheap and easy to use, nice!" may be filled into the input box 702, to complete the input. In this case, the user taps a release button 706 to complete the comment.

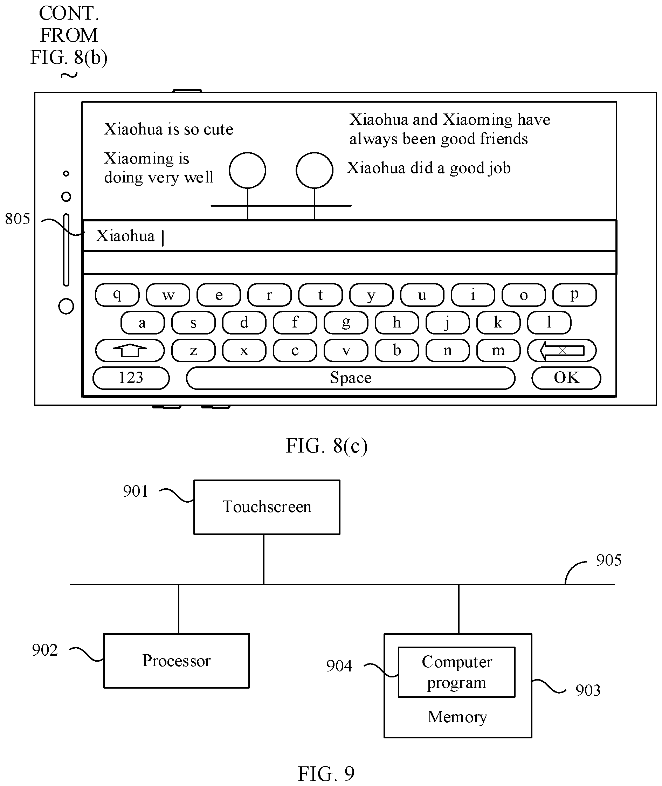

With reference to the examples in FIG. 8(a) to FIG. 8(c) and S404, after the electronic device receives the operation of selecting the input box 802 by the user, as shown in FIG. 8(b), after calling the input method application, the electronic device may display the interface 803 of the input method application. The interface 803 of the input method application includes candidate content 804: "Xiaohua" and "Xiaoming". If content that the user intends to input is "Xiaohua", as shown in FIG. 8(b), the user may directly select the candidate content "Xiaohua" (for example, tap the candidate content "Xiaohua") included in the interface 803 of the input method application, to complete the input. As shown in FIG. 8(c), in response to the operation of selecting (for example, tapping) the candidate content "Xiaohua" by the user, "Xiaohua" may be filled into the input box 805, to complete the input.

In some embodiments, it is assumed that an interface of the first API defines that the to-be-prompted content includes a plurality of layers of keywords. In this case, when the electronic device uses a first-layer keyword as the candidate content, and displays the first-layer keyword in an interface displayed after the input method application is started, if the user selects candidate content, a second-layer keyword that has a cascading relationship with the candidate content may be used as the candidate content for display.

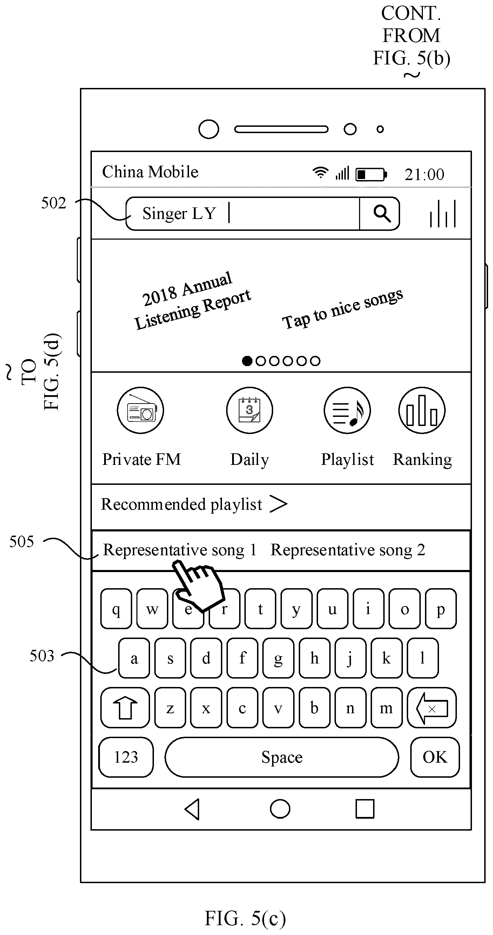

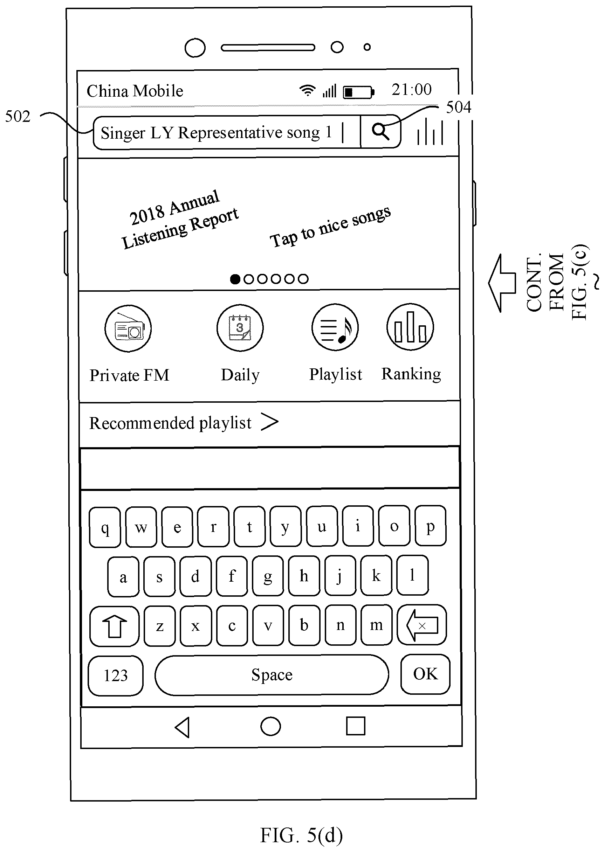

For example, with reference to FIG. 5(a) to FIG. 5(d), as shown in FIG. 5(b), if the user selects candidate content "Singer LY" (for example, taps the candidate content "Singer LY"), as shown in FIG. 5(c), the candidate content "Singer LY" may be filled into the input box 502. In addition, the electronic device may continue to display, in the interface 503 of the input method application, a second-layer keyword 505 that has a cascading relationship with "Singer LY": "Representative song 1" and "Representative song 2". If the user wants to input "Representative song 1", the user may tap the candidate content "Representative song 1". In response to the tapping operation, as shown in FIG. 5(d), the candidate content "Representative song 1" may also be filled into the input box 502. In this case, the user may tap the search button 504 to complete the search. In this way, input efficiency can be further improved.

Certainly, for a case in which the electronic device extracts a common part in the to-be-prompted content as the candidate content, after selecting the candidate content, the user may continue to display the rest part in the to-be-prompted content as the candidate content. For example, with reference to the example in FIG. 8(a) to FIG. 8(c), after the user selects the candidate content "Xiaohua", "is so cute" and "did a good job" may continue to be displayed in the interface 803 of the input method application as the candidate content. If the user selects "Xiaoming", "is doing very well" may continue to be displayed in the interface 803 of the input method application as the candidate content.

In addition, in this embodiment of this application, the input method application may further provide an introduction function for the user. For example, with reference to FIG. 5(a) to FIG. 5(d), as shown in FIG. 5(b), the interface 503 of the input method application includes candidate content "Singer ZC" and "Singer LY". If the user wants to know about "Singer ZC" and "Singer LY", for example, a brief description of a singer such as "Singer ZC", the user may perform an operation on the candidate content "Singer ZC" (the operation is an operation that is different from the tap operation, for example, a double-tap operation), or the interface 503 of the input method application includes a button, and the user may tap the button. In response to the operation of the user, the electronic device may present the introduction of "Singer ZC" to the user for viewing.

For another example, with reference to FIG. 6(a) to FIG. 6(c), as shown in FIG. 6(b), the interface 603 of the input method application includes candidate content "Shirt", "Shoulder bag", "Pants", and "Thermos cup". If the user wants to know about "Shirt", "Shoulder bag", "Pants", and "Thermos cup", for example, a brief description of a commodity such as "Shirt", the user may perform an operation on the candidate content "Shirt" (the operation is an operation that is different from the tap operation, for example, a double-tap operation), or the interface 603 of the input method application includes a button, and the user may tap the button. In response to the operation of the user, the electronic device may present a brief description of "Shirt" to the user for viewing, for example, provide some related pictures and/or text introductions of "Shirt".

According to the provided function, when the user does not understand a difference between candidate content provided by the input method application or does not know the candidate content provided by the input method application, the user can quickly find a corresponding brief description, thereby improving human-computer interaction efficiency, and improving user experience.

Optionally, after obtaining the candidate content in S404, the electronic device may filter out sensitive content in the candidate content (such as content that includes sensitive words such as violence and public opinion), and then display, in the interface of the input method application in S405, remaining candidate content obtained after the sensitive content is filtered out.

It may be understood that the interface of the input method application in the accompanying drawings shown in FIG. 5(a) to FIG. 5(d) to FIG. 8(a) to FIG. 8(c) is illustrated by using an input interface of a letter combination key having 26 keys as an example. The interface of the input method application may alternatively be an input interface of a number combination key having 9 keys, or another input interface. This is not specifically limited in this embodiment of this application.

According to the input method candidate content recommendation method provided in this embodiment of this application, when the user intends to input content into the input box of the application of the electronic device by using the input method application, the electronic device may present, to the user in the interface of the input method application after the input method application is started, the candidate content obtained based on the content that is specified by the first application and that needs to be prompted in the input box, for selection by the user. In this way, the candidate content presented after the input method application is started can better meet a requirement of the user, thereby improving accuracy of the presented candidate content, and improving input efficiency.

In addition, in the foregoing embodiment, an example in which the user inputs content into the input box (for example, the first input box) of the first application is used to describe the method provided in this embodiment of this application. Specific implementation in which the user inputs content into another input box of the first application or an input box (for example, referred to as a second input box) of a second application is similar to that in the foregoing embodiment, and details are not described herein again. The second application is another application having an input box that is of the electronic device and that is different from the first application. In this embodiment of this application, candidate content (for example, referred to as the first candidate content) presented in the interface of the input method application after the user selects the first input box of the first application may be different from candidate content (for example, referred to as second candidate content) presented in the interface of the input method application after the user selects the input box (for example, the second input box) of the second application. Even candidate content presented in the interface of the input method application after the user selects the first input box of the first application may be different from candidate content presented in the interface of the input method application after the user selects another input box (for example, referred to as a second input box) of the first application. In this way, candidate content that better meets a requirement of the user is presented to the user in the interface of the input method application, thereby improving user experience.

Some other embodiments of this application further provide an electronic device, configured to perform the methods in the foregoing method embodiments. As shown in FIG. 9, the electronic device may include a touchscreen 901, one or more processors 902, and a memory 903. The foregoing components may be connected by using one or more communications buses 905. The memory 903 stores one or more computer programs 904, the one or more processors 902 are configured to execute the one or more computer programs 904, the one or more computer programs 904 include instructions, and the instructions may be used to perform the steps performed by the electronic device in the corresponding embodiment in FIG. 4. The touchscreen 901 may be configured to: receive an operation of a user, and display content according to indications of the one or more processors 902.

For example, the one or more processors 902 are configured to run the one or more computer programs 904 to implement the following actions: indicating the touchscreen 901 to display an interface of a first application, where the interface of the first application includes a first input box; indicating the touchscreen 901 to receive an operation of selecting the first input box by the user; and in response to the operation of selecting the first input box by the user, indicating the touchscreen 901 to display an interface of an input method application, where the interface of the input method application includes at least one piece of candidate content. The one or more processors 902 are further configured to run the one or more computer programs 904 to implement the following actions: indicating the touchscreen 901 to display an interface including a second input box, where the second input box is an input box of the first application other than the first input box, or an input box of a second application; indicating the touchscreen 901 to receive an operation of selecting the second input box by the user; and in response to the operation of selecting the second input box by the user, indicating the touchscreen 901 to display an interface of the input method application, where the interface of the input method application may include at least one piece of second candidate content, and the second candidate content is different from the first candidate content.

For another example, the one or more processors 902 are further configured to run the one or more computer programs 904 to implement the following action: obtaining the at least one piece of first candidate content based on at least one piece of to-be-prompted content, where the to-be-prompted content is content that is specified by the first application and that needs to be prompted in the first input box.

Some other embodiments of this application further provide a computer storage medium. The computer storage medium may include computer instructions. When the computer instructions are run on an electronic device, the electronic device is enabled to perform the steps performed by the electronic device in the corresponding embodiment in FIG. 4.

Some other embodiments of this application further provide a computer program product. When the computer program product is run on a computer, the computer is enabled to perform the steps performed by the electronic device in the corresponding embodiment in FIG. 4.

Some other embodiments of this application further provide an input method candidate content recommendation apparatus. The apparatus has functions of implementing behavior of the electronic device in the corresponding embodiment in FIG. 4. The functions may be implemented by hardware, or may be implemented by hardware by executing corresponding software. The hardware or the software includes one or more modules corresponding to the foregoing functions, for example, a display unit or module, an input unit or module, a data obtaining unit or module, a data parsing unit or module, and a data presentation unit or module.

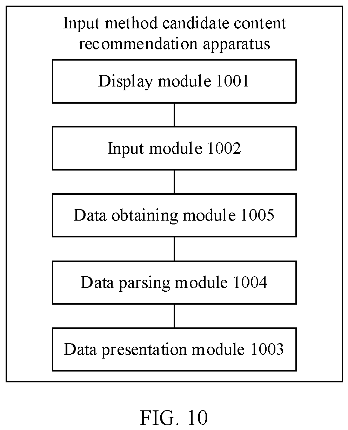

For example, as shown in FIG. 10, the apparatus may include a display module 1001, an input module 1002, and a data presentation module 1003.

The display module 1001 is configured to display an interface of a first application, where the interface of the first application may include a first input box.

The input module 1002 is configured to receive an operation of selecting the first input box by a user.

The data presentation module 1003 is configured to: in response to the operation received by the input module 1002, display an interface of an input method application, where the interface of the input method application includes at least one piece of first candidate content.

The display module 1001 is further configured to display an interface including a second input box, where the second input box is an input box of the first application other than the first input box, or an input box of a second application.

The input module 1002 is further configured to receive an operation of selecting the second input box by the user.

The data presentation module 1003 is further configured to: in response to the operation received by the input module 1002, display an interface of the input method application, where the interface of the input method application includes at least one piece of second candidate content, and the second candidate content is different from the first candidate content.

Further, as shown in FIG. 10, the apparatus may further include a data parsing module 1004.

The data parsing module 1004 is configured to obtain the at least one piece of first candidate content based on at least one piece of to-be-prompted content, where the to-be-prompted content is content that is specified by the first application and that needs to be prompted in the first input box.

Further, as shown in FIG. 10, the apparatus may further include a data obtaining module 1005.

The data obtaining module 1005 is configured to: obtain the at least one piece of to-be-prompted content; and store the at least one piece of to-be-prompted content in a storage area of the input method application.

The data parsing module 1004 is specifically configured to obtain the at least one piece of first candidate content based on the at least one piece of to-be-prompted content stored in the storage area of the input method application.

Further, the data obtaining module 1005 is specifically configured to call a first API to store the at least one piece of to-be-prompted content in the storage area of the input method application, where the first API provides an information channel from the first application to the input method application.

Further, the data parsing module 1004 is specifically configured to obtain the at least one piece of first candidate content based on the at least one piece of to-be-prompted content obtained by calling a first API.

The first API is an interface of an application framework layer of the electronic device.

Further, the data obtaining module 1005 is specifically configured to: read the at least one piece of to-be-prompted content from a storage area of the first application; or send a request message to a server of the first application, and receive a response message from the server, where the response message includes the at least one piece of to-be-prompted content; or obtain the at least one piece of to-be-prompted content from the interface of the first application.

Further, the at least one piece of first candidate content is the same as the at least one piece of to-be-prompted content.

Further, the data parsing module 1004 is specifically configured to: extract a keyword in the at least one piece of to-be-prompted content, and use the keyword as the at least one piece of first candidate content.

Further, the at least one piece of to-be-prompted content includes at least a first-layer keyword and a second-layer keyword. The data parsing module 1004 is specifically configured to: extract the first-layer keyword in the at least one piece of to-be-prompted content, and use the first-layer keyword as the at least one piece of first candidate content.

Further, when the at least one piece of to-be-prompted content includes at least the first-layer keyword and the second-layer keyword, the input module 1002 is further configured to receive an operation of selecting the first-layer keyword by the user.

The data presentation module 1003 is further configured to: in response to the operation of selecting the first-layer keyword, display the second-layer keyword in the interface of the input method application.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, the division into modules or units is merely division into logical functions and there may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed on a plurality of different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An input method candidate content recommendation method, applied to an electronic device comprising an input method application, wherein the method comprises:
displaying, by the electronic device, an interface of a first application, wherein the interface of the first application comprises a first input box;
receiving, by the electronic device, an operation of selecting the first input box by a user;
in response to the operation of selecting the first input box by the user, displaying, by the electronic device, an interface of the input method application, wherein the interface of the input method application comprises at least one piece of first candidate content;
displaying, by the electronic device, an interface comprising a second input box, wherein the second input box is an input box of the first application other than the first input box, or an input box of a second application;
receiving, by the electronic device, an operation of selecting the second input box by the user; and
in response to the operation of selecting the second input box by the user, displaying, by the electronic device, an interface of the input method application, wherein the interface of the input method application comprises at least one piece of second candidate content, and the second candidate content is different from the first candidate content.

2. The method according to claim 1, wherein before the displaying, by the electronic device, an interface of the input method application that comprises at least one piece of first candidate content, the method further comprises:
obtaining, by the electronic device, the at least one piece of first candidate content based on at least one piece of to-be-prompted content, wherein the to-be-prompted content is content that is specified by the first application and that needs to be prompted in the first input box.

3. The method according to claim 2, wherein before the obtaining, by the electronic device, the at least one piece of first candidate content based on at least one piece of to-be-prompted content, the method further comprises:
obtaining, by the electronic device, the at least one piece of to-be-prompted content; and
storing, by the electronic device, the at least one piece of to-be-prompted content in a storage area of the input method application; and
the obtaining, by the electronic device, the at least one piece of first candidate content based on at least one piece of to-be-prompted content comprises:
obtaining, by the electronic device, the at least one piece of first candidate content based on the at least one piece of to-be-prompted content stored in the storage area of the input method application.

4. The method according to claim 3, wherein the storing, by the electronic device, the at least one piece of to-be-prompted content in a storage area of the input method application comprises:
calling, by the electronic device, a first application programming interface API to store the at least one piece of to-be-prompted content in the storage area of the input method application, wherein the first API provides an information channel from the first application to the input method application.

5. The method according to claim 2, wherein the obtaining, by the electronic device, the at least one piece of first candidate content based on at least one piece of to-be-prompted content comprises:
obtaining, by the electronic device, the at least one piece of first candidate content based on the at least one piece of to-be-prompted content obtained by calling a first API.

6. The method according to claim 4 or 5, wherein the first API is an interface of an application framework layer of the electronic device.

7. The method according to claim 3 or 4, wherein the obtaining, by the electronic device, the at least one piece of to-be-prompted content comprises:
reading, by the electronic device, the at least one piece of to-be-prompted content from a storage area of the first application; or
sending, by the electronic device, a request message to a server of the first application, and receiving a response message from the server, wherein the response message comprises the at least one piece of to-be-prompted content; or
obtaining, by the electronic device, the at least one piece of to-be-prompted content from the interface of the first application.

8. The method according to any one of claims 2 to 7, wherein the at least one piece of first candidate content is the same as the at least one piece of to-be-prompted content; or
the obtaining, by the electronic device, the at least one piece of first candidate content based on at least one piece of to-be-prompted content comprises: extracting, by the electronic device, a keyword in the at least one piece of to-be-prompted content, and using the keyword as the at least one piece of first candidate content; or
the at least one piece of to-be-prompted content comprises at least a first-layer keyword and a second-layer keyword, and the obtaining, by the electronic device, the at least one piece of first candidate content based on at least one piece of to-be-prompted content comprises: extracting, by the electronic device, the first-layer keyword in the at least one piece of to-be-prompted content, and using the first-layer keyword as the at least one piece of first candidate content.

9. The method according to claim 8, wherein when the at least one piece of to-be-prompted content comprises at least the first-layer keyword and the second-layer keyword, after the displaying, by the electronic device, an interface of the input method application that comprises at least one piece of first candidate content, the method further comprises:
receiving, by the electronic device, an operation of selecting the first-layer keyword by the user; and
in response to the operation of selecting the first-layer keyword, displaying, by the electronic device, the second-layer keyword in the interface of the input method application.

10. An electronic device, wherein the electronic device comprises one or more processors, a memory, and a touchscreen, wherein
the touchscreen is configured to: receive an operation of a user, and display content according to indications of the one or more processors; the memory is configured to store one or more programs; and the one or more processors are configured to run the one or more programs to implement the following actions:
indicating the touchscreen to display an interface of a first application, wherein the interface of the first application comprises a first input box;
the touchscreen receives an operation of selecting the first input box by the user;
in response to the operation of selecting the first input box by the user, indicating the touchscreen to display an interface of the input method application, wherein the interface of the input method application comprises at least one piece of first candidate content;
indicating the touchscreen to display an interface comprising a second input box, wherein the second input box is an input box of the first application other than the first input box, or an input box of a second application;
indicating the touchscreen to receive an operation of selecting the second input box by the user; and
in response to the operation of selecting the second input box by the user, indicating the touchscreen to display an interface of the input method application, wherein the interface of the input method application comprises at least one piece of second candidate content, and the second candidate content is different from the first candidate content.

11. The electronic device according to claim 10, wherein the one or more processors are further configured to run the one or more programs to implement the following action:
obtaining the at least one piece of first candidate content based on at least one piece of to-be-prompted content, wherein the to-be-prompted content is content that is specified by the first application and that needs to be prompted in the first input box.

12. The electronic device according to claim 11, wherein the one or more processors are further configured to run the one or more programs to implement the following actions:
obtaining the at least one piece of to-be-prompted content, and storing the at least one piece of to-be-prompted content in a storage area of the input method application of the memory; and
the obtaining the at least one piece of first candidate content based on at least one piece of to-be-prompted content comprises: obtaining the at least one piece of first candidate content based on the at least one piece of to-be-prompted content stored in the storage area of the input method application of the memory.

13. The electronic device according to claim 12, wherein the storing the at least one piece of to-be-prompted content in a storage area of the input method application of the memory comprises:
calling a first application programming interface API to store the at least one piece of to-be-prompted content in the storage area of the input method application of the memory, wherein the first API provides an information channel from the first application to the input method application.

14. The electronic device according to claim 11, wherein the obtaining the at least one piece of first candidate content based on at least one piece of to-be-prompted content comprises:
obtaining the at least one piece of first candidate content based on the at least one piece of to-be-prompted content obtained by calling a first API.

15. The electronic device according to claim 13 or 14, wherein the first API is an interface of an application framework layer of the electronic device.

16. The electronic device according to claim 12 or 13, wherein the obtaining the at least one piece of to-be-prompted content comprises:
reading the at least one piece of to-be-prompted content from a storage area of the first application of the memory; or
sending a request message to a server of the first application, and receiving a response message from the server, wherein the response message comprises the at least one piece of to-be-prompted content; or
obtaining the at least one piece of to-be-prompted content from the interface of the first application.

17. The electronic device according to any one of claims 11 to 16, wherein the at least one piece of first candidate content is the same as the at least one piece of to-be-prompted content; or
the obtaining the at least one piece of first candidate content based on at least one piece of to-be-prompted content comprises: extracting a keyword in the at least one piece of to-be-prompted content, and using the keyword as the at least one piece of first candidate content; or
the at least one piece of to-be-prompted content comprises at least a first-layer keyword and a second-layer keyword, and the obtaining the at least one piece of first candidate content based on at least one piece of to-be-prompted content comprises: extracting the first-layer keyword in the at least one piece of to-be-prompted content, and using the first-layer keyword as the at least one piece of first candidate content.

18. The electronic device according to claim 17, wherein when the at least one piece of to-be-prompted content comprises at least the first-layer keyword and the second-layer keyword, the one or more processors are further configured to run the one or more programs to implement the following actions:
indicating the touchscreen to receive an operation of selecting the first-layer keyword by the user; and
in response to the operation of selecting the first-layer keyword, indicating the touchscreen to display the second-layer keyword in the interface of the input method application.

19. A computer storage medium, comprising computer instructions, wherein when the computer instructions are run on an electronic device, the electronic device is enabled to perform the input method candidate content recommendation method according to any one of claims 1 to 9.

20. A computer program product, wherein when the computer program product is run on a computer, the computer is enabled to perform the input method candidate content recommendation method according to any one of claims 1 to 9.
